# EUROPEAN PATENT APPLICATION

(11) **EP 1 903 008 A1**
(43) Date of publication of application: **26.03.2008**
(21) Application number: 06780680.2
(22) Date of filing: 30.06.2006
(51) Int. Cl.: C02F 1/28, B01D 61/02, B01D 61/04, B01D 61/16, B01D 65/02, C02F 1/32, C02F 1/44, C02F 1/72

(54) **METHOD FOR TREATMENT OF WATER CONTAINING HARDLY-DEGRADABLE SUBSTANCE**

(30) Priority: 14.07.2005 JP 2005206109
(71) Applicant: IDEMITSU KOSAN CO., LTD., Tokyo 100-8321 (JP)
(72) Inventor: MURAMOTO, Takahisa, 2990293 (JP); MORIMITSU, Kozo, 2990293 (JP); MACHIDA, Masashi, 2990293 (JP); YOSHIOKA, Yoshiyuki, 2990293 (JP)
(74) Representative: Vossius & Partner
(86) International application number: PCT/JP2006/313113
(87) International publication number: WO 2007/007569

(57) **Abstract**

A method for treating a hardly-decomposable-substance-containing water which including: (B) adding an adsorbent to water containing a hardly decomposable substance to cause the hardly decomposable substance to be adsorbed on the adsorbent (adsorption treatment step); (C) separating a permeated liquid through a filter membrane to concentrate the adsorbent which has adsorbed the hardly decomposable substance (membrane filtering treatment step); (D) decomposing the hardly decomposable substance which has been adsorbed on the concentrated adsorbent (hardly decomposable substance decomposition step); and (E) returning the adsorbent after the decomposition of the hardly decomposable substance to the adsorption treatment step (B) (adsorbent returning step); and an apparatus for the treatment .

## Description

### TECHNICAL FIELD

The invention relates to a method for treating water containing a hardly decomposable substance such as dioxins and other endocrine-disrupting substances.

### BACKGROUND

In Japan, a law concerning special measures against dioxins was enacted in 1999, which regulates the emission standard value of dioxins to 10 pg-TEQ/L or less. However, discharged water caused by the demolition of incinerators, discharged water from particular industrial institutions, or part of water seeping from soil may contain dioxins at a concentration larger than the regulated amount. Therefore, development of a technology for reducing or removing dioxins is strongly desired.

Other than dioxins, endocrine-disrupting substances (the so-called environmental endocrine disruptors or endocrine-disrupting chemicals) such as bisphenols, and various organic chlorine compounds represented by trichloroethane are also hardly decomposable substances, and their emission standard values are stipulated. As in the case of the dioxins, techniques for reducing or removing these substances are strongly desired.

As the method for removing the hardly decomposable substances such as dioxins from discharged water which contains these hardly decomposable substances (contaminated water), chemical decomposition of dioxins in which discharged water is directly subjected to an ozone treatment, a photodegradation treatment, or a treatment with hydrogen peroxide, decomposition of dioxins with microorganisms or removal/separation using an adsorbent or a flocculating agent have been conducted. However, these separating and removing techniques are not preferable since they are not only inefficient but also require a great deal of equipment investment since a diluted liquid is directly treated. Further, when discharged water is badly contaminated, there may be some unfavorable cases where the emission standard value cannot be fulfilled even though the above techniques have been applied.

As the method for detoxifying these hardly decomposable organic compounds, for example, as the method for removing dioxins, methods are known in which dioxins are chemically decomposed with ozone, photodegradated, or decomposed with hydrogen peroxide, decomposed with microorganisms, or separated/removed using an absorbent or a flocculating agent. Of these techniques, adding an oxidant to dioxins to detoxify them by chemical decomposition is employed due to ready operation. As the oxidant for chemically decomposing dioxins, use of persulfate has been proposed (Patent Document 1 and Patent Document 2, for example).

On the other hand, a method for treating discharged water is reported which comprises subjecting contaminated water to a settling treatment, filtering with a net having an average pore diameter of 10 to 100 µm, irradiating the filtrate with ultraviolet light in the presence of photocatalyst powder to perform catalytic cracking, and then treating it with an ultrafilter membrane (Patent Document 3, for example).
Also proposed is a treatment method in which discharged water is separated with a reverse osmosis membrane (RO membrane) and a concentrated liquid is then subjected to oxidization in which the concentrated liquid is chemically decomposed with active oxygen (Patent Document 4 and Patent Document 5, for example).

Further, as the technique for preventing discharge of a hardly decomposable substance, physical methods, chemical methods, and biological methods are known, for example.
The physical methods include the adsorption method. Specifically, a method in which activated carbon is introduced into water (see Non-patent document 1, for example) and a method in which activated carbon is introduced into a discharged gas have been developed. In this case, however, activated carbon that has once adsorbed a hardly decomposable substance still holds the hardly decomposable substance internally, and therefore, it cannot be discarded as it is.

The activated carbon used for the above adsorption is discarded by incineration, thermal decomposition or landfill. However, this method involves the risk that an adsorbate may be discharged together with a discharged gas and can cause secondary pollution, or may seep out from the landfill to cause re-contamination. Under such circumstances, a safe and economical treatment method is desired.

As the method for decomposing a hardly decomposable substance contained in discharged water, soil or sludge, a thermal decomposition method, a chemical decomposition method using an alkali, a method using a supercritical liquid, and a method using a combination of ozone, peroxide such as hydrogen peroxide or hydrochlorite with ultraviolet light, or the like can be given. In addition to these, biological methods using white-rot fungi or enzymes produced by microorganisms are under investigation.

These methods have their own merits and demerits. Therefore, while some methods can be easily applied, others cannot be easily applied, depending upon the state of existence of a hardly decomposable substance. For example, thermal decomposition or decomposition using supercritical water requires expensive facilities or energy, and there are many cases where they cannot be put into practice from an economical viewpoint. Further, a method using a combination of ozone or hydrogen peroxide with ultraviolet light cannot be applied to a suspension that does not easily transmit ultraviolet light or a solid such as soil or sludge. Therefore, discharged water containing a suspended substance or a wafting substance is treated after the suspended substance or wafting substance is once removed by filtering or settling for its separation. A hardly decomposable substance adsorbed on the suspended substance or wafting substance needs to be detoxified separately.

With regard to discharged water, further, various chemical decomposition methods including a chemical decomposition method using a combination of hydrogen peroxide with an iron salt and a chemical decomposition method using persulfate or permanganate were proposed.
For example, Patent document 6 discloses a treatment method that can remove an endocrine-disrupting chemical with a simple device and an easy operation for a short period of time, whereby the concentration thereof can be reduced to a low level. In this method, an endocrine-disrupting chemical in water is adsorbed on activated carbon, or the like, concentrated by desorption thereof, and a peroxide such as persulfate is brought into contact with the resultant concentrated liquid to perform decomposition. In general, harmful substances such as an endocrine-disrupting chemical cause a problem that, as operation becomes complicated, possibility of re-contaminating a human body or an ambient environment will increase.

Therefore, if a hardly decomposable substance adsorbed on a solid can be decomposed as it is without being eluted, the operation is simple and it is possible to avoid the risk of the re-contamination of a human body or an ambient environment. Further, there are many industrial advantages that an adsorbent used for separation of a hardly decomposable substance can be reused, that a substance treated can be transported, and that the method can be applied to solid contaminants of soil or sludge. Therefore, development of such a technology has been long awaited.

The treatment of discharged water containing a hardly decomposable substance will be further described in more detail below.
Among sources known for generating discharged water containing a hardly decomposable substance are the following: chlorine-bleaching equipment in a kraft pulp production plant, equipment for the decomposition of disposed PCB (polychlorobiphenyl) or a substance resulting from the treatment of PCB, equipment for washing a PCB-contaminated substance or a substance resulting from the treatment of PCB, waste gas cleaning equipment of a melting furnace, etc., for the production of aluminum or aluminum alloy, wet-type dust collecting equipment, a waste pit that discharges contaminated water, and other similar sources.

Further, the Environmental Agency has amended the standard for water environment contaminants, and organic compounds such as trichloroethylene, tetrachloroethylene, PCB, or the like, have been newly added to the environmental standard object substances which heretofore mainly included heavy metals.

There has heretofore been developed a technique for removing a hardly decomposable substance as much as possible from water to be treated which contains such a hardly decomposable substance using a filter device, a membrane separation method, or the like, and decomposing the hardly decomposable substance in the water treated (see Patent Document 7, for example).

For treating discharged water containing a hardly decomposable substance in the above-mentioned manner, a filtering treatment, a biological treatment, etc., are carried out as pre-treatments, and an ozone treatment, an ultraviolet irradiation treatment, a catalytic treatment or an activated carbon treatment is carried out as a post treatment. As is understood from the above, conventional decomposition and removal treatments required a great deal of labor and a large amount of materials.

Further, in the case of an ultraviolet irradiation treatment, for example, there is the problem that it can be applied only to a reaction system which transmits ultraviolet light and cannot be applied to a solid-containing liquid or a solid. Moreover, a hardly decomposable substance removed by the pre-treatment needs to be detoxified separately to prevent secondary pollution.

It is therefore strongly desired to develop a technique for efficiently decomposing these hardly decomposable substances in a closed system which is free from the fear of re-contaminating a human body and an ambient environment.

Patent Document 1: JP-A-2003-93999
Patent Document 2: JP-A-2003-285043
Patent Document 3: JP-A-2003-144857
Patent Document 4: JP-A-11-347591
Patent Document 5: JP-A-2000-354894
Patent Document 6: JP-A-2000-189945
Patent Document 7: JP-A-11-99395
Non-patent document 1: "Countermeasure techniques against dioxins" under the editorship of Naomichi HIRAYAMA, issued by CMC, pages 197-205 (1998)
   However, when a hardly decomposable organic compound is chemically decomposed by adding persulfate to such a hardly decomposable organic compound as disclosed in the above-mentioned Patent Document 1 or Patent Document 2, the decomposition efficiency of the hardly decomposable organic compound is low. Therefore, it is extremely difficult to decompose the compound when it is contained at a high concentration. On the other hand, hardly decomposable organic compounds contained at a high concentration are often treated with persulfate to which a metal salt such as ruthenium salt has been added. However, such a metal salt is very expensive, and the use thereof is not practical from an economical viewpoint.
   If a technique as disclosed in Patent Document 3 is applied to discharged water containing a small amount of a solid in a decomposed substance, a layer of a settled solid is not formed on a metal mesh, and a dioxin-containing solid of fine particles of a decomposed substance or dissolved dioxin pass through the metal mesh, and as a result, the treatment is sometimes insufficient.
   In techniques disclosed in Patent Document 4 and Patent Document 5, when free chlorine is present in contaminated water, it is required to add an excess amount of a reducing substance such as bisulfite for neutralizing the free chlorine. This bisulfite or the like inhibits the chemical decomposition, and hence, it is hard to assert that such a technique is efficient for separation and removal of a hardly decomposable substance.
   In concentrating and detoxifying hardly decomposable substances such as dioxins contained in contaminated water (raw water to be treated) such as discharged water generated caused by the demolition of incinerators, discharged water from particular industrial institutions, or part of water seeping from soil, an object of the invention is to provide a method for treating discharged water which can use a closed system which efficiently decomposes a hardly decomposable substance contained in a solid as it is without performing an operation such as desorbing, as well as to provide an on-site cycle method for treating discharged water in which an adsorbent used for absorption and separation of a hardly decomposable substance is reused, thereby eliminating generation of waste.
   Another object of the invention is to provide a highly reliable discharged water treatment system, which combines various separation steps and decomposition steps so that fulfillment of the emission standard value is ensured even when the concentration of a hardly decomposable substance in discharged water varies.

### SUMMARY OF THE INVENTION

The inventors made extensive studies to achieve the above objects, and have found that the concentration of a hardly decomposable substance such as dioxins in discharged water can be decreased to a level lower than the emission standard value by combining a concentration technique by membrane separation, a chemical decomposition technique and/or a photodegradation technique.
As a result of further extensive studies, the inventors have found a method of reusing an absorbent, and have completed a cyclic on-site treatment system which generates no or very little waste.
Further, it has been found that when treatment with a reverse osmosis membrane (RO membrane) or a nano-filter membrane (NF membrane) by which a salt can be concentrated and treatment with an ultrafilter membrane (UF membrane) through which a salt passes are combined, the osmotic pressure caused by in-process concentration of a salt contained in filthy water, or the like, can be prevented from being increased and a decrease in filtering capability can be suppressed.
The inventors have further found that using titanium dioxide having high adsorption efficiency as an adsorbent can increase the efficiency of chemical decomposition and that, since the titanium dioxide serves as a photocatalyst and is hence used as a catalyst for photodegradation, the photodegradation is utilized in combination with chemical decomposition. Hence, a more reliable system for treating water containing a hardly decomposable substance can be provided. The invention has been made based on this finding.

That is, according to a first aspect of the invention, the following methods for treating water containing a hardly decomposable substance are provided.
1. A method for treating a hardly-decomposable-substance-containing water which comprises:
   (B) adding an adsorbent to water containing a hardly decomposable substance to cause the hardly decomposable substance to be adsorbed on the adsorbent (adsorption treatment step);
   (C) separating a permeated liquid through a filter membrane to concentrate the adsorbent which has adsorbed the hardly decomposable substance (membrane filtering treatment step);
   (D) decomposing the hardly decomposable substance which has been adsorbed on the concentrated adsorbent (hardly decomposable substance decomposition step); and
   (E) returning the adsorbent after the decomposition of the hardly decomposable substance to the adsorption treatment step (B) (adsorbent returning step).

2. The method for treating hardly-decomposable-substance-containing water according to 1, wherein the step (E) is the step of separating the water containing the adsorbent after the decomposition of the hardly decomposable substance into a solid and a liquid, and returning the adsorbent to the adsorbent treatment step (B).
3. The method for treating hardly-decomposable-substance-containing water according to 2, wherein the step (E) is the step of separating a permeated liquid through a filter membrane and backwashing the filter membrane to free the adsorbent therefrom after the decomposition of the hardly decomposable substance, and returning the adsorbent to the adsorbent treatment step (B).
4. The method for treating hardly-decomposable-substance-containing water according to any one of 1 to 3, wherein the step (D) is the step (D-1) of decomposing the hardly decomposable substance which has been adsorbed on the concentrated adsorbent by irradiating with UV light (photodegradation step) and/or the step (D-2) of chemically decomposing the hardly decomposable substance which has been adsorbed on the concentrated adsorbent with a peroxide without performing desorption from the adsorbent (chemical decomposition step).

5. The method for treating hardly-decomposable-substance-containing water according to 4, wherein the step (D-2) uses the peroxide in an amount of at least 100 times larger in molar relative to that of the hardly decomposable substance.
6. The method for treating hardly-decomposable-substance-containing water according to any one of 1 to 5 which further comprises the step (A) of separating a permeated liquid from the water containing the hardly decomposable substance through a reverse osmosis membrane (RO membrane) or a nano-filter membrane (NF membrane) to concentrate the hardly decomposable substance (membrane concentrating treatment step).
7. The method for treating hardly-decomposable-substance-containing water according to any one of 1 to 6, which further comprises the step (I) of removing a volatile component contained in the hardly-decomposable-substance-containing water (volatile substance removal step).
8. The method for treating hardly-decomposable-substance-containing water according to any one of 1 to 7, which further comprises the step (M) of removing a solid matter contained in the hardly-decomposable-substance-containing water (pre-filtering step).

9. The method for treating hardly-decomposable-substance-containing water according to any one of 1 to 8, which further comprises the step (G) of backwashing the filter membrane used in the step (C) to free the adsorbent which has adsorbed the hardly decomposable substance from the filter membrane (backwash step).
10. The method for treating hardly-decomposable-substance-containing water according to any one of 1 to 9, wherein the adsorbent added in the step (B) is one inorganic adsorbent, or two or more inorganic adsorbents, which is or are selected from the group consisting of titanium dioxide, zeolite, acid clay, activated clay, diatomite, metal oxide, metal powder, activated carbon and carbon black.

11. The method for treating hardly-decomposable-substance-containing water according to 10, wherein the adsorbent added in the step (B) is titanium dioxide.
12. The method for treating hardly-decomposable-substance-containing water according to any one of 1 to 11, wherein the filter membrane used in the step (C) is selected from the group consisting of an ultrafilter membrane (UF membrane), a nano-filter membrane (NF membrane), a microfiltration membrane (MF membrane) and a reverse osmosis membrane (RO membrane).
13. The method for treating hardly-decomposable-substance-containing water according to any one of 4 to 12, wherein the peroxide used in the step (D-2) is a persulfate. 14. The method for treating hardly-decomposable-substance-containing water according to any one of 1 to 13, wherein at least part of the hardly decomposable substance concentrated in the step (A) and/or the adsorbent which has adsorbed the hardly decomposable substance concentrated in the step (C) are/is returned to the water containing the hardly decomposable substance (raw water to be treated), or a step upstream of the step (A) or the step (C).

A second aspect of the invention provides an apparatus for treating hardly-decomposable-substance-containing water to carry out the first aspect of the invention.
15. An apparatus for treating hardly-decomposable-substance-containing water, which comprises:
   an adsorbent adding section for adding an adsorbent to water containing a hardly decomposable substance;
   a membrane filtering section for separating a permeated liquid through a filter membrane to concentrate the adsorbent which has adsorbed the hardly decomposable substance;
   a hardly decomposable substance decomposition section for decomposing the hardly decomposable substance which has been adsorbed on the adsorbent; and
   an adsorbent returning section for returning the adsorbent after the decomposition of the hardly decomposable substance to the adsorbent adding section.

16. The apparatus for treating hardly-decomposable-substance-containing water according to 15, which comprises:
   a volatile substance removal section for removing a volatile substance contained in the hardly-decomposable-substance-containing water;
   a reducing substance introduction section for introducing a reducing substance to water containing a hardly decomposable substance to neutralize free chlorine in the water;
   a membrane concentrating section for separating a permeated liquid from the water containing a hardly decomposable substance through a reverse osmosis membrane (RO membrane) or a nano-filter membrane (NF membrane) to concentrate the hardly decomposable substance;
   an adsorbent adding section for adding an adsorbent to the concentrated hardly decomposable substance to cause the adsorbent to adsorb the hardly decomposable substance;
   a membrane filtering section for separating a permeated liquid through a filter membrane to concentrate the adsorbent which has adsorbed the hardly decomposable substance;
   a hardly decomposable substance decomposition section for decomposing the hardly decomposable substance which has been adsorbed on the adsorbent; and
   an adsorbent returning section for separating a permeated liquid through a filter membrane and returning the adsorbent after the decomposition of the hardly decomposable substance.

According to the first and second aspects of the invention, hardly decomposable substances such as dioxins, or the like, which are contained in water, can be efficiently decomposed and removed without being affected by the concentrations thereof.
According to the first and second aspects of the invention, chemical decomposition based on an oxidizing agent alone and photodegradation based on irradiation with ultraviolet light alone, or the chemical decomposition and the photodegradation are combined, whereby a hardly decomposable substance contained in water can be efficiently reduced to a low level. As a result, a highly reliable treatment system can be provided.

According to the first and second aspects of the invention, further, the above chemical decomposition treatment and/or photodegradation treatment is carried out in a state where a hardly decomposable substance is adsorbed on a solid, without carrying out the operation of desorbing, whereby the above adsorbent can be regenerated. As a result, the adsorbent can be repeatedly used, the treatment system can be cyclic, and the amount of waste can be significantly reduced.

According to the first and second aspects of the invention, water containing a hardly decomposable substance can be efficiently and safely treated in a closed system, and the entire treatment is completed within a site where hardly-decomposable-substance-containing water generates. As a result, transportation of a hardly decomposable substance or other associated works that would cause environmental pollution become no longer necessary (on-site treatment is possible), and the environment is in no case adversely affected.

### BRIEF DESCRIPTION OF THE DRAWINGS

FIG. 1 is a flow chart showing the configuration of the steps essential for the method for treating hardly-decomposable-substance-containing water of the invention.
FIG. 2 is a flow chart showing one preferred embodiment of the method for treating hardly-decomposable-substance-containing water of the invention.
FIG. 3 is a flow chart showing one embodiment of the method for treating hardly-decomposable-substance-containing water of the invention in which photodegradation and chemical decomposition are used.
FIG. 4 is a flow chart showing one embodiment of the method for treating hardly-decomposable-substance-containing water of the invention in which photodegradation is used.
FIG. 5 is a schematic view of a treatment apparatus for practicing the method for treating the hardly-decomposable-substance-containing water of the invention in which photodegradation and chemical decomposition are used.
FIG. 6 is a schematic view of a treatment apparatus for practicing the method for treating the hardly-decomposable-substance-containing water of the invention in which photodegradation is used.
FIG. 7 is a schematic view showing the configuration of an apparatus used in Example 1.
FIG. 8 is a schematic view showing the configuration of an apparatus used in Example 2.
FIG. 9 is a schematic view showing the configuration of an apparatus used in Example 3.
FIG. 10 is a schematic view showing the configuration of an apparatus used in Example 4.
FIG. 11 is a schematic view showing the configuration of an apparatus used in Example 5.
FIG. 12 is a schematic view showing the configuration of an apparatus used in Example 6.

### BEST MODE FOR CARRYING OUT THE INVENTION

The invention will be described in detail.
The method for treating hardly-decomposable-substance-containing water according to the first aspect of the invention (hereinafter referred to as "the method of the invention") comprises the steps of:
(B) adding an adsorbent to water containing a hardly decomposable substance to cause the hardly decomposable substance to be adsorbed on the adsorbent (adsorption treatment step);
(C) separating a permeated liquid through a filter membrane to concentrate the adsorbent which has adsorbed the hardly decomposable substance (membrane filtering treatment step);
(D) decomposing the hardly decomposable substance which has been adsorbed on the concentrated adsorbent (hardly decomposable substance decomposition step); and
(E) returning the adsorbent after decomposition of the hardly decomposable substance to the absorption step (B) (adsorbent returning step).

The method of the invention is a method in which a hardly decomposable substance contained in water is concentrated by filtering through a membrane and removed from the water, and the concentrated hardly decomposable substance is detoxified preferably by chemical decomposition and/or by photodegradation.
In the invention, the expression "concentrating" a hardly decomposable substance or an adsorbent which has adsorbed a hardly decomposable substance means increasing the concentration of the hardly decomposable substance or the adsorbent which has adsorbed the hardly decomposable substance in water which contains them.

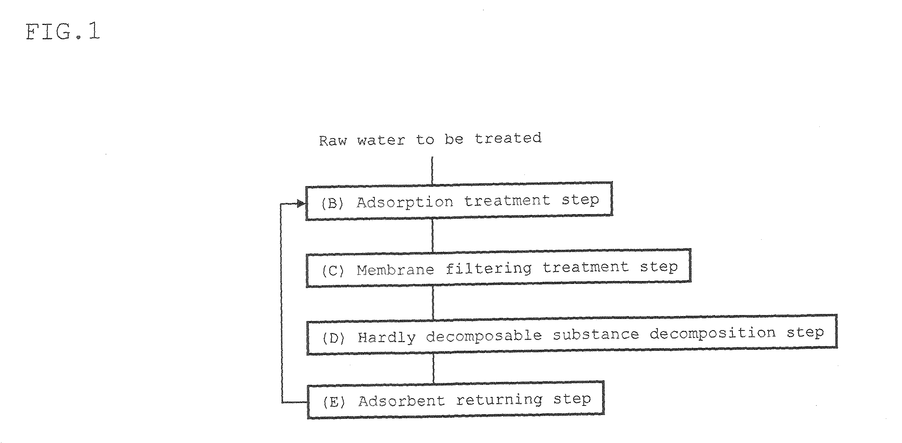

FIG. 1 shows essential steps in the method of the invention.

Examples of the hardly decomposable substance that can be detoxified by the method of the invention include dioxins that are harmful contaminants in soil or sludge and also include other endocrine-disrupting substances and carcinogenic substances.

The above dioxins include, for example, halogenated dibenzodioxins, halogenated dibenzofurans, PCBs (in particular, coplanar PCBs in which a chlorine atom is substituted at a position other than the ortho-position).

Examples of the halogenated dibenzodioxins include 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,4,6,7,8-heptaahlaradibenza-p-dioxin and 1,2,3,4,6,7,8,9-octachlorodibenzo-p-dioxin.

Examples of the halogenated dibenzofurans include 2,3,7,8-tetrachlorodibenzofuran, 1,2,3,7,8-pentachlorodibenzofuran, 1,2,3,4,7,8-hexachlorodibenzofuran, 1,2,3,4,6,7,8-heptaohlorodibenzofuran and 1,2,3,4,6,7,8,9-octachlorodibenzofuran.

Examples of the PCBs (in particular, coplanar PCBs in which a chlorine atom is substituted at a position other than the ortho-position) include 3,3',4,4',5-tetrachlorobiphenyl, 3,3',4,4',5-pentachlorobiphenyl and 3,3' ,4,4' ,5,5'-hexachlorobiphenyl.

The endocrine-disrupting substances other than dioxins and carcinogenic substances include alkylphenols such as t-butyl phenol, nonyl phenol and octyl phenol, halogenated phenols such as tetrachlorophenol and pentachlorophenol, bisphenols such as 2,2-bis(4-hydroxyphenyl)propane (bisphenol A) and 1-bis(4-hydroxyphenyl)cyclohexane, polycyclic aromatic hydrocarbons such as benzopyrene, chrysene, benzoanthracene, benzofluoranthene and picene, and phthalic esters such as dibutyl phthalate, butyl benzyl phthalate and di-2-ethylhexyl phthalate.

In addition to the above dioxins and PCBs, hardly decomposable organic halogen compounds such as dichloropropane, trichloroethane, trichloroethylene, tetrachloroethylene and dichloroethylene can be also removed by photodegradation or chemical decomposition according to the method of the invention.

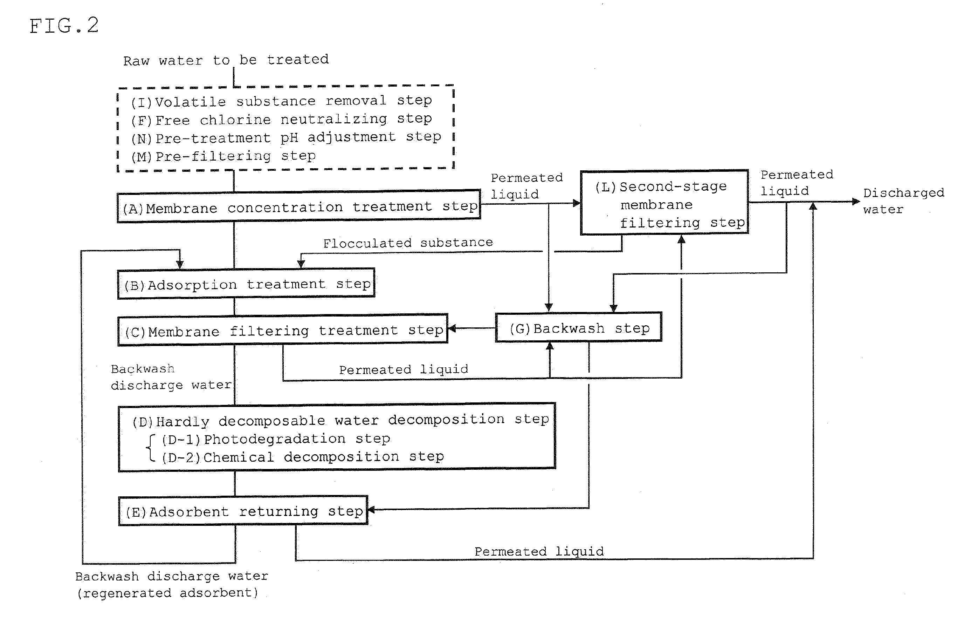

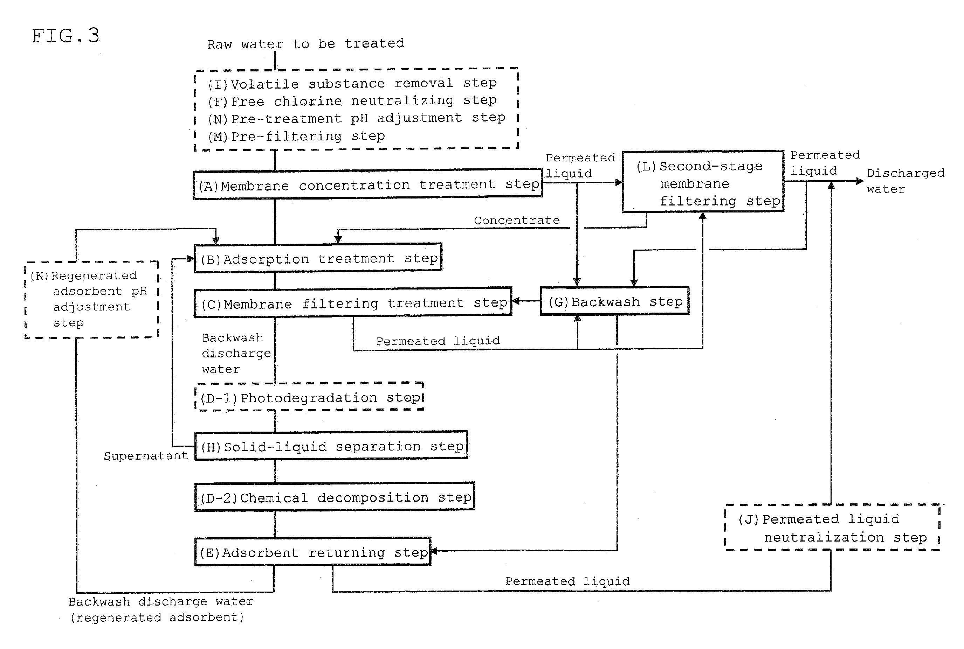

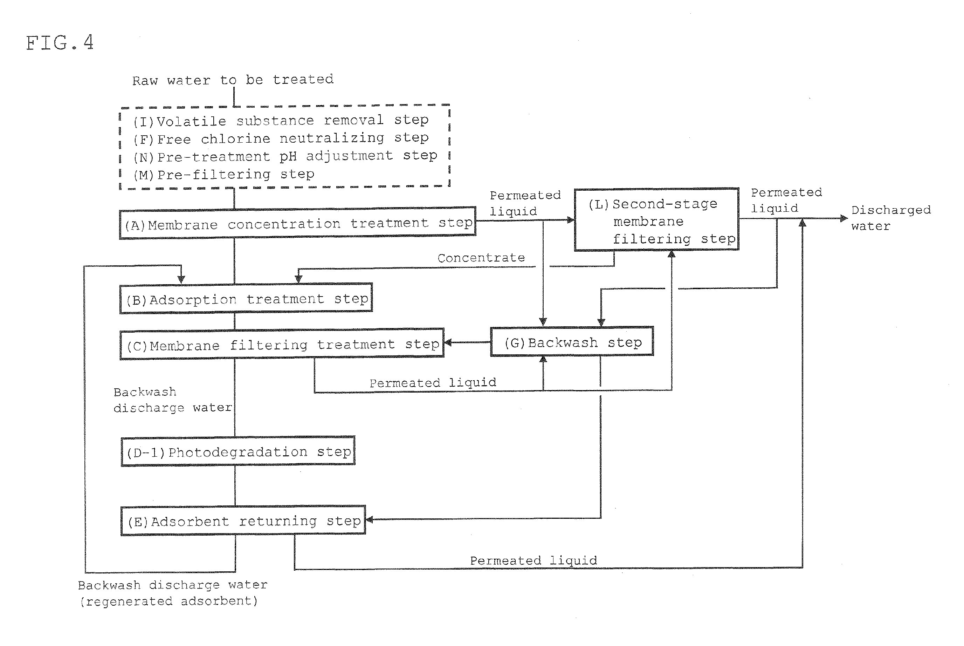

The method of the invention includes, as the essential steps, the adsorption treatment step (B), the membrane filtering treatment step (C), the hardly decomposable substance decomposition step (D), and the adsorbent returning step (E), may optionally include at least one step selected from the group consisting of the membrane concentrating treatment step (A), the free chlorine neutralization step (F), the volatile substance removal step (I), the pre-filtering step (M), the pre-treatment pH adjusting step (N), the backwash step (G), the solid-liquid separation step (H), the permeated liquid neutralization step (J), the regenerated adsorbent pH adjusting step (K), and the second-stage membrane filtering treatment (L). Each of the above steps may be carried out once or may be carried out twice or more. By performing one or two or more of the above steps a plurality of times, hardly decomposable substances can be reliably decomposed and removed to a lower level. Each step will be explained below with reference to FIG. 2. Each optional step, which is provided if need arises, will be explained with reference to FIG. 3 which shows the case, which is a preferable embodiment, where photodegradation and chemical decomposition are used in combination and FIG. 4 which shows the case where only photodegradation is used.

(I) Volatile substance removal step
   If volatile substances (light components with a low boiling point) are present in water containing a hardly decomposable substance, these volatile substances may be adsorbed on the adsorbent, causing the adsorbent to have low adsorption efficiency for a hardly decomposable substance. This step is provided to prevent this problem. Therefore, it is preferred that the volatile substances be removed prior to the step (B) (adsorption treatment step).
   The kind of volatile substances to be removed is not particularly limited and depends on the type of hardly-decomposable-substance-containing water. Generally, hydrogen chloride can be given, for example.
   Methods for removing the volatile substances include distillation, evaporation, bubbling through an inert gas, and heating (flushing) at a temperature which does not cause a hardly decomposable substance such as dioxins to evaporate. For safety, it is preferred that the volatile substance be adsorbed on activated carbon or the like, and incinerated at a temperature which is high enough to decompose harmful substances.

(F) Free chlorine neutralization step
   This is an optional step of neutralizing residual free chlorine in hardly-decomposable-substance-containing water. Residual free chlorine is preferably removed in advance since it oxidizes and deteriorates a reverse osmosis membrane. A chlorine concentration is measured with a chlorine concentration meter, and a proper amount of a reducing substance is added. The reducing substance includes sodium bisulfite, sodium metabisulfite and sulfur dioxide. Of these, sodium bisulfite is preferred.

(N) Pre-treatment pH adjustment step
   This is an optional step of adjusting pH of the hardly-decomposable-substance-containing water after neutralizing the hardly-decomposable-substance-containing water (raw water to be treated) or free chlorine. If the pH of the hardly-decomposable-substance-containing water is low after neutralization of the hardly-decomposable-substance-containing water (raw water to be treated) or free chlorine, a filter membrane to be used in later steps may be damaged. To prevent this, the pH adjustment (adjustment to preferably to around 7) is performed preferably before the steps where a filter membrane is used.
   Although there are no particular restrictions on the kind of a pH adjuster used in this step, sodium hydroxide or the like can be used, for example.

(M) Pre-filtering step
   This is an optional step of filtering hardly-decomposable-substance-containing water with a 10 µm pre-filter, for example, for preventing foreign particles in the water from clogging a reverse osmosis membrane or for removing a volatile substance which has adsorbed on an adsorbent.
   The solid matters with hardly decomposable substance being adhered thereto which have been removed by the pre-filter are removed from the filter by backwashing, and then sent to the adsorption treatment step (B), the hardly decomposable substance decomposition step (D) or the like, described later, for a decomposition treatment.

The order of pre-treatments including the volatile substance removal step (I), the free chlorine neutralization step (F), the pre-treatment pH adjustment step (N), and the pre-filtering step (M) is not particularly restricted, and can be determined appropriately depending on the type of the hardly-decomposable-substance-containing water (raw water to be treated). In order to ensure removal of solid matters which may cause clogging of the filter membrane, it is preferred that the pre-filtering step (M) be performed immediately before the membrane concentration treatment step (A), described later.

(A) Membrane concentrating treatment step
   This is an optional step of separating a permeated liquid from hardly-decomposable-substance-containing water through a reverse osmosis membrane (RO membrane) or a nano-filter membrane (NF membrane) to concentrate a hardly decomposable substance. For example, since dioxin has a molecular weight of 200 or more, it can be isolated through a reverse osmosis membrane or a nano-filter membrane on the molecular level. The reverse osmosis membrane and the nano-filter membrane do not pass not only a hardly decomposable substance but also a salt contained in the water through them. Therefore, the salt is concentrated at the same time, and as a result, the osmotic pressure of the hardly-decomposable-substance-containing water increases and the filtering performance deteriorates.
   The term "salt" as used herein includes all the kinds of salts contained in the hardly-decomposable-substance-containing water and mainly includes sodium chloride, metabisulfite or bisulfite, and sodium bisulfate. Sodium chloride is generated when residual chlorine is neutralized, and a large amount of sodium chloride is contained in the hardly-decomposable-substance-containing water to be treated.

The operation pressure in the membrane concentrating treatment with a reverse osmosis membrane is not particularly limited. However, with an increase in the operation pressure, generally, the ratio of removal of hardly decomposable substances such as dioxin is increased. Therefore, the operation is preferably carried out at 1 MPa or more, more preferably at 1.5 MPa or more, which is higher than the commonly set value of 0.3 MPa. If an increase in the osmotic pressure due to the above-mentioned salt concentration becomes a problem, the operation pressure is preferably 7 MPa or more. Further, for operating the reverse osmosis membrane for a long period of time and for preventing a decrease in the removal ratio caused by the concentration of circulating water, the ratio of concentrated water and permeated liquid can be determined as required depending upon the properties of discharged water. However, it is generally in the range of 1:99 to 80:20, preferably 30:70 to 60:40, and particularly preferably 50:50.

The material for constituting the reverse osmosis membrane includes resin materials such as a polyamide material (including cross-linked polyamide and aromatic polyamide materials), an aliphatic amine condensate material, a heterocyclic polymer material, a cellulose acetate material, a polyethylene material, a polyvinyl alcohol material, and a polyether material.

There is no particular restriction on the morphology of the reverse osmosis membrane, and it may be an asymmetric membrane or a composite membrane.
Further, as a membrane module, a flat type module, a hollow fiber type module, a spirally wound type module, a cylindrical (tubular) type module, a pleated type module can be used appropriately.

The material for constituting the nano-filter membrane (NF membrane) includes resin materials such as a polyamide material (including cross-linked polyamide or aromatic polyamide materials), an aliphatic amine condensate material, a heterocyclic polymer material, a cellulose acetate material, a polyethylene material, a polyvinyl alcohol material and a polyether material, and inorganic materials such as ceramics.

The morphology of the nano-filter membrane is not particularly limited, and as in the case of the above reverse osmosis membrane, it can be an asymmetric membrane or a composite membrane.
Further, as a membrane module, a flat type module, a hollow fiber type module, a spirally wound type module, a cylindrical (tubular) type module, a pleated type module, or the like can be used appropriately.

While the desalting ratio of the reverse osmosis membrane (sodium chloride elimination ratio) is not particularly limited, it is preferable to select a reverse osmosis membrane having a selectivity of approximately 95% or more. Further, when a nano-filter membrane is used, it is preferable to use a nano-filter membrane having a selectivity of approximately 40% or more in terms of salt elimination. If the concentration of salts in the hardly-decomposable-substance-containing water is high, a filter membrane with a low salt elimination ratio (desalting ratio) may be used. By using such a filter membrane, an increase in the concentration of salts due to the cycle treatment can be suppressed.

Further, in the membrane concentrating treatment with the above reverse osmosis membrane or nano-filter membrane, a liquid portion which has not passed the membrane (concentrated water) may be returned to the untreated hardly-decomposable-substance-containing water.
The permeated liquid generated in this step can be used as the backwash water in the backwash step (G) described later, or, if the concentration of the hardly decomposable substance is lower than the emission standard value, the permeated liquid can be released as discharged water.

The membrane is cleaned if the membrane is contaminated by long-time operation or insufficient pre-treatments. The cleaning agent used for cleaning the membrane is not particularly limited, but generally, an aqueous oxalic acid solution, an aqueous citric acid solution, an aqueous ammonium citrate solution, an aqueous hydrochloric acid solution, an aqueous sulfuric acid solution, an aqueous sodium hydroxide solution, an oxidizing agent, a reducing agent, a surfactant, or the like can be given. The concentration, pH or the like of the cleaning agent can be appropriately selected according to the chemicals resistance of the membrane.

(B) Adsorption treatment step
   This is a step of adding an adsorbent to the hardly-decomposable-substance-containing water (raw water to be treated) or water in which the hardly decomposable substance is concentrated in the above step (A) to cause the hardly decomposable substance to be adsorbed on the adsorbent. When the hardly decomposable substance or the water concentrated by the above membrane concentrating treatment is subjected to the membrane filtering treatment step (C), the hardly decomposable substance cannot be concentrated since the molecular cutoff of the filter membrane is large as compared with the size of the hardly decomposable substance such as dioxin. Therefore, an adsorbent is added to cause the fine hardly decomposable substance to be adsorbed on adsorbent particles that are large, and then the membrane filtering treatment (C) is carried out, whereby the hardly decomposable substance is concentrated.

The adsorbent for use in the method of the invention includes an inorganic porous material and an organic porous material. Specifically, the adsorbent includes inorganic porous materials such as zeolite, diatomite, acid clay, activated clay and carbon black, metal oxides such as titanium dioxide, inorganic adsorbents such as a metal powder, organic porous materials such as activated carbon and an ion-exchange resin. These may be used singly or in combination of at least two materials of these. As the adsorbent, inorganic adsorbents are preferred, and of these, titanium dioxide having high adsorption efficiency is particularly preferred.
Further, when the photodegradation step (D-1) to be described later is provided, it is preferable to use an adsorbent that can function as a photocatalyst, and titanium dioxide can be given as the example of such adsorbent.

The amount of the adsorbent to be added can be determined as required by taking into account of the kind of the adsorbent, adsorption performances, the kind and amount of a contaminant to be treated, a treatment time period, a cost, and the like. Generally, it is 1 to 1,000 ppm, preferably 10 to 100 ppm.
When titanium dioxide is used as an adsorbent, the amount of an adsorbed hardly decomposable substance increases as the amount of titanium dioxide is increased, resulting in an increased cost. The amount of titanium dioxide to be added should therefore be determined as required by taking cost or the like into consideration, and generally, and it is preferably in the range of 1 to 100,000 ppm, more preferably in the range of 10 to 1,000 ppm.
Further, for improving the adsorption efficiency and decomposition efficiency, it is preferable to use an adsorbent having a large specific surface area. For example, when the adsorbent is titanium dioxide, titanium dioxide having an X-ray particle diameter of approximately 7 nm is preferred.

Further, with an increase in the contact time during which the adsorbent is in contact with the hardly-decomposable-substance-containing water, the adsorption efficiency is improved. However, the contact time can be determined appropriately by taking into account of the size of a treatment tank, or the like. It is preferred that the contact time be approximately 1 to 2 hours, for example.

(C) Membrane filtering treatment step
   This is a step of separating a permeated liquid that contains salts but substantially does not contain the hardly decomposable substance, through a filter membrane that does not pass an adsorbent which has adsorbed the hardly decomposable substance but passes salts to obtain water having an increased concentration of the adsorbent which has adsorbed the hardly decomposable substance. By this step, salts can be removed.

The type of membrane for use in the membrane filtering treatment is not particularly restricted so long as it has the above separation capability. In view of excellent separation capability and easiness in handling, the membrane is preferably an ultrafilter membrane (UF membrane), a nano-filter membrane (NF membrane), a microfiltration membrane (MF membrane), a reverse osmosis membrane (RO membrane), or the like.

Of these, an ultrafilter membrane is capable of fully removing fine particles such as a fine adsorbent which adsorbs dioxins or water-insoluble dioxins, and it is also excellent in operability and economic performance.

As the ultrafilter membrane, a porous membrane, an asymmetrical membrane, a composite membrane, or the like can be given. The material for constituting the ultrafilter membrane (UF membrane) includes resin materials such as a cellulose acetate material, a polyacrylonitrile material, a polysulfin material and a polyether sulfone material. The membrane of an inorganic material such as a ceramics membrane or a dynamics membrane may also be used.
As a membrane module, a flat type module, a hollow fiber type module, a spiral wound type module, a cylindrical type module, a pleated type module, or the like can be used appropriately.
While the molecular cutoff of the ultrafilter membrane is not particularly limited, there can be used an ultrafilter membrane having a molecular cutoff of approximately 3,000 to 150,000.

As the microfiltration membrane (MF membrane), a porous membrane, an asymmetrical membrane, an irradiation etching membrane, an ion exchange membrane or the like can be given. The material for constituting the microfiltration membrane (MF membrane) includes resin materials such as a cellulose ester material, a polyacrylonitrile material, a polysulfin material and a polyether sulfone material and inorganic materials such as ceramics and metals. A flat membrane, a filter cartridge, a disposal cartridge type, a bug filter and the like can be selected according to need.
While the size of pores (micropores) of the microfiltration membrane can be determined as required depending upon the particle diameter of an adsorbent to be used for the adsorption treatment, it may be approximately 0.01 to 1 µm.

In addition, the reverse osmosis membrane (RO membrane) and the nano-filter membrane (NF membrane) are as explained with regard to the above membrane concentrating treatment step (A).

(G) Backwash step
   This is a step of backwashing the filter membrane used in the above step (C) to free the adsorbent which has adsorbed the hardly decomposable substance from the filter membrane. When the ultrafilter membrane is used in the above step (C), the adsorbent which has adsorbed the hardly decomposable substance (in particular, when titanium dioxide is used as an adsorbent) causes the ultrafilter membrane to be clogged. Therefore, for preventing the decrease of the filtering ability of the above filter membrane, and for enabling the cycle treatment, it is preferred that the filter membrane be backwashed periodically. While the frequency of the backwashing can be selected as required, the backwashing is preferably performed, for example, once every 30 to 120 minutes, and for about 1 to 10 minutes each. Further, when the above backwashing is performed, there are no particular restrictions on the water for the backwashing (backwash water) insofar as it is clean water free of any solids. It is economically preferable to use a permeated liquid obtained in the above membrane concentrating treatment step (A), a permeated liquid obtained in the membrane filtering step (C), or a permeated liquid obtained in the second-stage membrane filtering treatment step (L) described later as the water for the backwash (backwash water). The permeated liquid obtained in the above membrane concentrating treatment step (A) is particularly preferred since it has a low salt concentration.
   It is preferable to add a cleaning agent such as sodium hypochlorite, citric acid or the like to the backwash water for cleaning, and the cleaning agent can be added in such an amount that the residual free chlorine concentration after the backwashing will be in the range of 1 to 100 mg/L.
   For improving the hardly decomposable substance decomposition efficiency in steps to follow, water that is transferred to the hardly decomposable substance decomposition step (D) to be described later preferably consists of only backwash discharge water from which the adsorbent which has adsorbed the hardly decomposable substance is washed off. Alternatively, the hardly decomposable substance concentrated water obtained in the membrane concentrating treatment step (A) may be transferred to the hardly decomposable substance decomposition step (D) according to need.
   Adding a flocculating agent is not advantageous if a cycle treatment is performed. A flocculating agent may be added if all or part of the adsorbent is discarded as industrial waste.
   To water containing the adsorbent which has adsorbed the hardly decomposable substance, a flocculating agent may be added to promote agglomeration and separation of the adsorbent which has adsorbed the hardly decomposable substance. More specifically, addition of a flocculating agent to water containing the adsorbent which has adsorbed the hardly decomposable substance concentrated in the above step (C) or the backwash discharge water obtained in the above step (G) further flocculates the adsorbent which has adsorbed the hardly decomposable substance, and thereby obtaining a flocculation substance containing the hardly decomposable substance. The flocculation substance generally settles (settling substance), while it may be a substance which tends to come up to the liquid surface and aggregate (floating substance).
   A liquid (supernatant liquid, usually) obtained by separation of the flocculation substance containing the hardly decomposable substance in this step can be returned to any step in the treatment method of the invention. Consequently, when the concentration of the hardly decomposable substance is lower than the emission standard value, it may be discharged.
   The adsorbent which has adsorbed the hardly decomposable substance is fine and solid-liquid separation takes time. Addition of the flocculating agent is carried out for decreasing this time period and for increasing the decomposition efficiency in the subsequent hardly decomposable substance decomposition step (D). Use of the flocculating agent leads to the generation of waste, which makes the cycle treatment of discharged water difficult. For this reason, the amount of the flocculating agent should be minimized.
   As a flocculating agent, an inorganic flocculating agent or an organic flocculating agent may be used alone or in combination of both. Examples of the inorganic flocculating agent include aluminum sulfate, ferric chloride, ferrous sulfate, aluminum polychloride and a zeolite.
   Examples of the organic flocculating agent include various anionic polymer flocculating agents and cationic polymer flocculating agents, such as sodium polyacrylate, a copolymer of sodium acrylate and acrylamid. As the mixing agent, bryozoa, a silicate polymer, or the like can be given.
   The type of flocculating agent is not particularly restricted so long as it exerts no adverse effect on the hardly decomposable substance decomposition step (D). However, preferred is an agent composed mainly of an inorganic material that gives a flocculation substance having high bulk density in a small amount.

As in the case of the adsorbent, the amount of the flocculating agent can be determined as required by taking into account the kind of flocculating agent, the adsorption performance, cost and the like. A flocculating agent is generally added in an amount of 1 to 10,000 ppm, preferably 10 to 1,000 ppm. Taking into consideration a decrease in the amount of a finally discharged solid to be as small as possible, it is preferred that the amount of the flocculating agent be not excessive. For cost reduction, using no flocculating agent is desirable.

(H) Solid-liquid separation step
   This is an optional step provided if the chemical decomposition step (D-2) described later is provided for increasing the chemical decomposition efficiency by separating into a solid and a liquid the adsorbent which has been concentrated in the above step (C) and, optionally, decomposed by the photodegradation step (D-1), followed by reacting the resulting slurry with an oxidizing agent.
   There are no particular restrictions on the method for the solid-liquid separation. A known solid-liquid separation technique can be used. The method includes settling a solid substance, centrifugation, use of a liquid cyclone, and use of a filter press.

(D) Hardly decomposable substance decomposition step
   This is a step for detoxifying a hardly decomposable substance which has been adsorbed on the adsorbent or is present in a free state in the concentrated hardly-decomposable-substance-containing water.
   The hardly decomposable substance decomposition step (D) is preferably performed by the step (D-1) of decomposing the hardly decomposable substance which has been adsorbed on the concentrated adsorbent by irradiation with ultraviolet light (photodegradation step), and/or by the step (D-2) of chemically decomposing with a peroxide a hardly decomposable substance which has been adsorbed on the concentrated adsorbent without carrying out the operation of desorbing from the adsorbent (chemical decomposition step). Though the hardly decomposable substance may be detoxified by one of the photodegradation step (D-1) and the chemical decomposition step (D-2), combined use of these two steps is preferable since a hardly decomposable substance can be decomposed stably to a level below the emission standard value.

(D-1) Photodegradation step
   This is a step for decomposing a hardly decomposable substance by irradiation with ultraviolet light water containing an adsorbent which has adsorbed the hardly decomposable substance. The photodegradation step (D-1) may be provided alone as shown in FIG. 4 or in combination with the chemical decomposition step (D-2) as shown in FIG. 3. In other words, in this step, a hardly decomposable substance in water which has not been adsorbed on an adsorbent and part of a hardly decomposable substance in water which has been adsorbed on an adsorbent are decomposed. Provision of this step decreases the concentration of a hardly decomposable substance contained in discharged water after the treatment to a value below the emission standard value.
   In this step, further, when the adsorbent for use in the invention is titanium dioxide, the hardly decomposable substance in water can be more efficiently photodegraded by carrying out irradiation with light (preferably 250 to 380 nm). The longer the time period for the photodegradation is, the higher the decomposition efficiency is. For example, the addition of 20 ppm of titanium dioxide and the irradiation with ultraviolet light (254 nm) for 30 minutes result in a dioxins-decomposition-efficiency of approximately 60 to 70%.
   The light for use in the photodegradation step in the method is preferably ultraviolet light, and there can be also used light sources such as a low-pressure mercury lamp, a middle-pressure mercury lamp, a high-pressure mercury lamp, an excimer laser, natural light, and a fluorescent lamp.

(D-2) Chemical decomposition step
   This is a step of adding a peroxide to the adsorbent which has adsorbed the hardly decomposable substance concentrated in the above step (C), the adsorbent treated in the step (D-1) or the solid (settled or floating substance) obtained by the solid-liquid separation in the step (H), to chemically decompose the hardly decomposable substance. When the chemical decomposition is carried out, the peroxide is caused to react with the hardly decomposable substance which has been adsorbed on the adsorbent without carrying out the operation of desorbing the hardly decomposable substance from the adsorbent, whereby the hardly decomposable substance can be detoxified by the decomposition without causing the hardly decomposable substance to scatter.
   The chemical decomposition in the step (D-2) means decomposition by a common chemical method. Examples include oxidation decomposition or decomposition with a free radical.
   The above peroxide for chemically decomposing the hardly decomposable substance may react with the hardly decomposable substance while having the form as a compound as it is. Otherwise, it may react with the hardly decomposable substance in the form of a compound denatured in water, ion, radical, or the like.

The peroxide for use in this step include various metal salts such as permanganate, persulfate, sodium peroxide, barium peroxide, zinc peroxide, cadmium peroxide, potassium peroxide, calcium peroxide and chromium peroxide, hydrogen peroxide, ozone and a system using a metal catalyst and a hydrogen-donating material in combination.
Of these, peroxides that are preferably used as an oxidizing agent are permanganate and persulfate.

The permanganate includes zinc permanganate, cadmium permanganate, potassium permanganate, calcium permanganate, silver permanganate, strontium permanganate, cesium permanganate, sodium permanganate, barium permanganate, magnesium permanganate, lithium permanganate and rubidium permanganate.

The persulfate includes ammonium persulfate, sodium persulfate, potassium persulfate, potassium hydrogen persulfate, lead persulfate and rubidium persulfate. As an oxidizing agent, persulfates such as ammonium persulfate, sodium persulfate and potassium persulfate are particularly preferred. These may be used singly or may be used in combination of two compounds or more of these. The amount thereof based on the molar amount of the hardly decomposable substance which has been adsorbed on the adsorbent is preferably at least 100 times by mole, more preferably in the range of 10⁴ to 10¹² times by mole, still more preferably 10⁷ to 10¹⁰ times by mole. When the molar amount of the peroxide is at least 100 times the molar amount of the hardly decomposable substance, the hardly decomposable substance which has been adsorbed on the adsorbent can be stably chemically decomposed to such an amount that is the emission standard value (3,000 pg-TEQ/g) of industrial waste or less even if the concentration of the hardly decomposable substance in the hardly-decomposable-substance-containing water varies.
The peroxide may be added all at once at the start of the reaction or may be added with a predetermined time interval.

Specifically, the amount of the peroxide can be determined as required depending upon the kind and concentration of the hardly decomposable substance of a hardly-decomposable-substance-containing material and the kind and concentration of a co-present substance. When the hardly-decomposable-substance-containing material is in the state of a liquid, the above amount is preferably 100 to 100,000 ppm, particularly preferably 1,000 to 50,000 ppm. When the hardly-decomposable-substance-containing material is a solid, the amount of the peroxide based on the hardly-decomposable-substance-containing material is preferably 0.01 to 100 mass%, particularly preferably 0.1 to 20 mass%.

The amount of the peroxide to be added differs depending upon the pH of water to be treated, and when the reaction alone is promoted, the peroxide can be added taking the oxidizing power of the persulfate into account.
For promoting the decomposition by the peroxide, further, it is preferable to allow the peroxide to react with the hardly decomposable substance in a state where the peroxide is dissolved in the water. Further, other oxidizing agents such as hydrogen peroxide and ozone may be co-present.

For carrying out the above decomposition reaction more effectively, further, a suitable amount of an organic solvent may be added to this reaction system. The above organic solvent is suitably selected from hydrocarbons having 2 to 12 carbon atoms, such as n-hexane, toluene, xylene, and methylphthalene. An acid such as sulfuric acid may be added to allow the reaction to proceed with an acid such as peroxosulfuric acid being generated.

Persulfate is decomposed by heating to generate bisulfate ion radical, sulfate ion radical and hydroxyl radical, and these radicals decompose the hardly decomposable substance such as dioxins. Since these radicals release electrons for a short period of time, it is preferable to bring the adsorbent which has adsorbed the hardly decomposable substance into a slurry state and stir the slurry for improving the decomposition efficiency. If stirring is carried out vigorously, probability of contact of the radicals to the hardly decomposable substance is increased. Vigorous stirring is hence advantageous. However, stirring has its own limit, and it is preferable to carry out stirring vigorously to an extent that it is not significantly disadvantageous from an economical viewpoint, depending upon the volume of a decomposition tank and the viscosity of the slurry.

The reaction temperature for the chemical decomposition of the hardly decomposable substance which has adsorbed on the adsorbent with the peroxide is preferably room temperature to 100°C, more preferably 40°C to 100°C. When the reaction temperature is lower than 40°C, the decomposition may take a longer time.

If the temperature for the chemical decomposition is high, the decomposition rate is increased. For the decomposition treatment at the boiling temperature of water (higher than 100°C when the salt concentration is high) or higher, a pressure vessel is required. Thus, it is preferable to carry out the decomposition treatment under atmospheric pressure at the boiling temperature or lower. In addition, when the decomposition treatment is carried out under atmospheric pressure at the boiling point or higher, water is evaporated and the hardly decomposable substance such as dioxin or the like is also evaporated as the temperature is increased. As a result, waste gas treatment equipment is required to prevent secondary pollution.

When heating is carried out in the invention, the heating method is not particularly limited, and any one of an electrical heating method, a hot water supplying method, a water vapor sucking method, a boiler method, or the like can be employed. In the hot water supplying method, it is required to be careful not to increase the content of water to be excessive. When the water content is too large, the concentration of the persulfate for the reaction decreases. While the time period for the chemical decomposition treatment cannot be determined since it is affected by the treatment temperature and other conditions, it is generally approximately 10 minutes to 500 hours.

(E) Adsorbent returning step
   This is a step of returning the adsorbent after the decomposition of the hardly decomposable substance (regenerated adsorbent) to the adsorption treatment step (B). Provision of this step enables the adsorbent to be reused, and, at the same time, realizes a cycle treatment without generating waste.
   It is preferred that the regenerated adsorbent to be returned to the adsorption step (B) be subjected to the solid-liquid separation before returning to the step (B). The solid-liquid separation decreases the amount of water to be sent back to the step (B) with the regenerated adsorbent. If the solid-liquid separation step (H) is provided before the chemical decomposition step (D-2), since the amount of water contained in the regenerated adsorbent has already been decreased before the hardly decomposable substance decomposition treatment, the regenerated adsorbent may be returned to the step (B) without being subjected to the solid-liquid separation again in the step (E).
   There are no particular restrictions on the solid-liquid separation, and known solid/liquid separation methods can be used. Examples include natural settlement of a solid matter, centrifugation, use of a liquid cyclone, use of a filter press, and membrane separation. Of these, membrane separation is preferable. Separation operation can be selected appropriately taking process economics into consideration.
   When the membrane separation is used, water which contains the adsorbent after the decomposition of the hardly decomposable substance is filtered to separate the permeated liquid, the filter membrane is backwashed to obtain backwash discharge water which contains a free adsorbent removed from the filter membrane (regenerated adsorbent), and the backwash discharge water containing the regenerated adsorbent is returned to the adsorption step (B) .
   Any filter membrane may be used in the invention as long as it can remove intended adsorbent particles. Water containing the adsorbent after the chemical decomposition may have a pH value of 1 or less. It is preferred that a suitable filter membrane be selected according to the pH of the water. Examples of the filter membrane usable in the step include an ultrafilter membrane (UF membrane) and a microfiltration membrane (MF membrane).
   If the content of the hardly decomposable substance is confirmed to be the emission standard value (3,000 pg-TEQ/g) or less, the adsorbent which has adsorbed the hardly decomposable substance after the chemical decomposition can be discarded as ordinary industrial waste. All of the adsorbent after the hardly decomposable substance decomposition step (D) is not required to be returned to the step (B), and part of it may be discarded. In the step (B), only the regenerated adsorbent returned to this step may be used. Alternatively, the regenerated adsorbent may be used in the step (B) together with a fresh adsorbent. The amount ratio of the fresh adsorbent and the regenerated adsorbent is determined according to need.
   A solid waste containing the adsorbent to be discarded may be removed during the step of transmitting the adsorbent to the step (B) after the solid-liquid separation in the step (E).
   Further, the adsorbent that is once used for the adsorption of the hardly decomposable substance can be repeatedly used without being discarded immediately, until the performance thereof as an adsorbent deteriorates, and discharged water can be treated on site in a closed system. The method of the invention is hence remarkably highly safe and economical. Further, when the above adsorbent used for adsorbing the hardly decomposable substance is finally discarded, it can be discarded after the residual content of the hardly decomposable substance is fully reduced, so that the adsorbent has no adverse effect on natural environment.

(J) Permeated liquid neutralization step
   This is an optional step of neutralizing the permeated liquid separated from the regenerated adsorbent in the step (E). The permeated liquid separated in the step (E) may have a pH value of 1 or less due to the oxidizing agent used in the chemical decomposition step (D-2). If the permeated liquid is discharged as it is, the permeated liquid may affect adversely the environment. The neutralization is performed to avoid this.
   There are no particular restrictions on the neutralizer for neutralizing the permeated liquid. It is preferrable to use a sodium hydroxide solution as the neutralizer, for example.
   Generally, this step is not necessary when only the photodegradation step (D-1) is provided without provision of the chemical decomposition step (D-2).

(K) Regenerated adsorbent pH adjusting step
   The pH of the backwash discharge water containing the regenerated adsorbent obtained in the step (E) tends to lower as in the case of the above-mentioned permeated liquid. This is an optional step of the pH adjusting (neutralization) for preventing pH from lowering in an accumulated manner in the cycle process.
   There are no particular restrictions on the pH adjuster used in this step. It is preferable to use an aqueous sodium hydroxide solution or the like as the neutralizer, for example.
   Generally, this step is not necessary when only the photodegradation step (D-1) is provided without provision of the photochemical decomposition step (D-2).

(L) Second-stage membrane filtering step
   This is an optional step for re-filtering the hardly-decomposable-substance-containing water. In this step, by re-filtering the hardly decomposable substance contained in the permeated liquid generated in each step, the hardly-decomposable-substance-containing water can be discharged (released) stably with the concentration of the hardly decomposable substance being lowered to below the emission standard value even when the concentration of the hardly decomposable substance in the hardly-decomposable-substance-containing water is varied.
   In this step, it is preferable to use a nano-filter membrane (NF membrane) as the filter membrane used in this step.
   The permeated liquid obtained in this step may be discharged as it is if the concentration of the hardly decomposable substance is below the emission standard value, or may be used as the backwash water used in the above-mentioned backwash step (step G).
   It is preferred that the flocculation substance after the separation of the permeated liquid in this step be sent to the adsorption step (B) and be again subjected to the hardly decomposable substance decomposition step (D).

The apparatus for treating hardly-decomposable-substance-containing water according to the second aspect of this invention (hereinafter referred to as "the apparatus of the invention") comprises:
an adsorbent adding section for adding an adsorbent to hardly-decomposable-substance-containing water;
a membrane filtering section for separating a permeated liquid through a filter membrane to concentrate the adsorbent which has adsorbed the hardly decomposable substance;
a hardly decomposable substance decomposing section for decomposing the hardly decomposable substance which has been adsorbed on the adsorbent; and
an adsorbent returning section for returning the adsorbent after the decomposition of the hardly decomposable substance to the adsorbent adding section.

One or two or more sections may be provided for each of the above sections. By providing two or more sections, the hardly decomposable substance can be decomposed or removed stably even if the concentration of the hardly decomposable substance is varied.

A preferred embodiment of the apparatus of this invention comprises:
a volatile substance removal section for removing a volatile substance contained in hardly-decomposable-substance-containing water;
a reducing substance introduction section for introducing a reducing substance to water containing a hardly decomposable substance to neutralize free chlorine in the water;
a membrane concentrating section for separating a permeated liquid from the water containing a hardly decomposable substance through a reverse osmosis membrane (RO membrane) or a nano-filter membrane (NF membrane) to concentrate the hardly decomposable substance;
an adsorbent adding section for adding an adsorbent to the hardly decomposable substance concentrated, thereby to cause the hardly decomposable substance to be adsorbed on the adsorbent;
a membrane filtering section for separating a permeated liquid through a filter membrane to concentrate the adsorbent which has adsorbed the hardly decomposable substance;
a hardly decomposable substance decomposition section for decomposing the hardly decomposable substance which has been adsorbed on the adsorbent; and
an adsorbent returning section for returning the adsorbent after the decomposition of the hardly decomposable substance to the adsorbent adding section.

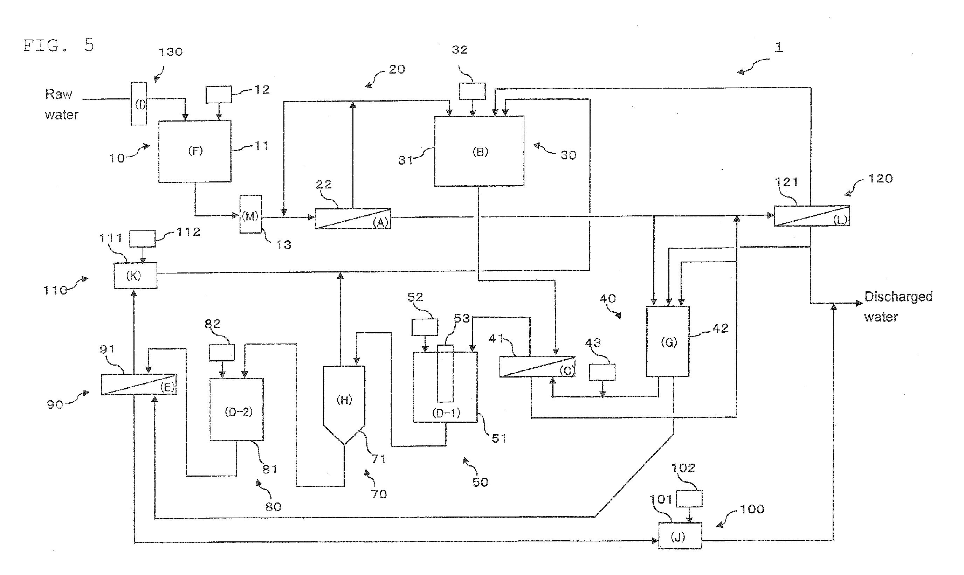

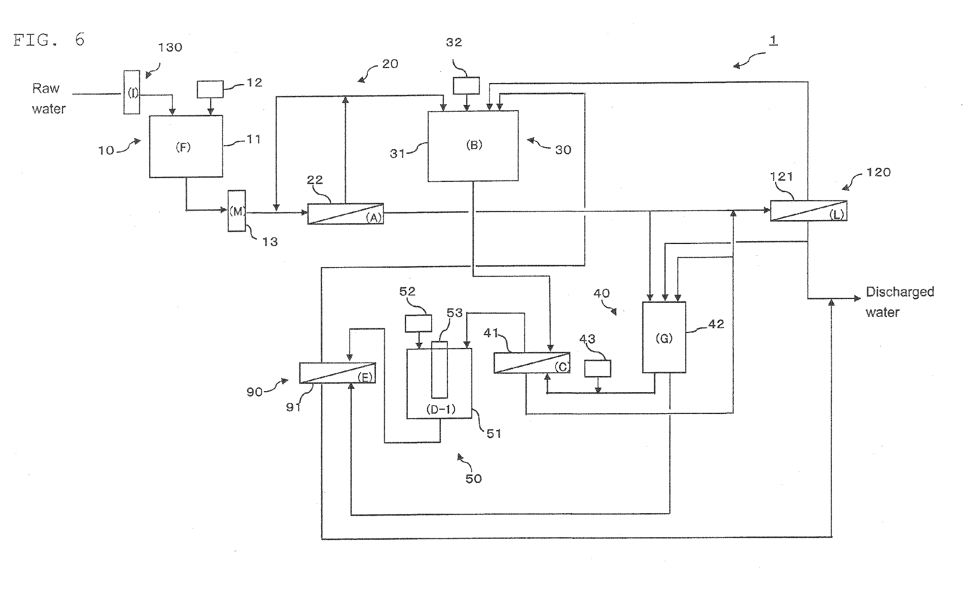

With regard to one example of the preferred embodiment of the apparatus of this invention, the entire flow of the treatment of hardly-decomposable-substance-containing water will be explained below with reference to FIGs. 5 and 6. FIG. 5 is one example of the apparatus for combination of the photodegradation step (D-1) and the chemical decomposition step (D-2). FIG. 6 shows one example of the apparatus for carrying out only the photodegradation step (D-1).
FIG. 5 is a schematic view of a treatment apparatus 1 for practicing one embodiment of the method for treating hardly-decomposable-substance-containing water according to the invention, in which photodegradation and chemical decomposition are combined. A treatment apparatus 1 shown in FIG. 5 has, as a basic configuration, a membrane concentrating section 20, an adsorbent adding section 30, a membrane filtering section 40, a photodegradation section 50, a solid-liquid separation section 70, a chemical decomposition section 80, and an adsorbent returning section 90. FIG. 5 also shows a reducing substance introduction section 10, a pre-filter 13, a volatile substance removal section 130, an acid neutralizing section 100, a regenerated adsorbent pH adjusting section 110, and a second-stage membrane filtering section 120, which are provided optionally.

### [Reducing substance introduction section 10]

First, water containing a hardly decomposable substance such as dioxins is placed in an introduction tank 11. Sodium bisulfite is introduced into the introduction tank 11 through a pump (not shown) from a reducing substance supplying portion 12 to neutralize free chlorine in raw water. In the introduction tank 11, further, the raw water and the sodium bisulfite are mixed with stirring means, and the concentration of residual chlorine in the raw water is measured with a chlorine meter (not shown).

### [Volatile substance removal section 130]

A volatile substance contained in the hardly-decomposable-substance containing water is removed. Though the method for removing a volatile substance is not particularly restricted, distillation, evaporation, bubbling through an inert gas or the like can be used.
It is preferred that a volatile substance be removed from the hardly-decomposable-substance-containing water by allowing it to be adsorbed on an adsorbent such as activated carbon (not shown), and incinerating the adsorbent at a temperature which is high enough to decompose a harmful substance.

### [Pre-filter 13]

The hardly-decomposable-substance-containing water which is optionally neutralized with sodium bisulfite may be passed through a pre-filter 13 to remove suspended substances, or the like.
As the material for a filter membrane used as the pre-filter, polypropylene or the like can be given.
The solid matter caught by the pre-filter can be discharged outside if the content of the hardly decomposable substance is below the emission standard value (3,000 pg-TEQ/g). Otherwise, the pre-filter is backwashed, and the backwash discharge water is introduced into an appropriate step of this process, preferably into a photodegradation tank 51 or a solid-liquid separation tank 71.

### [Membrane concentrating section 20]

The water which passes through the pre-filter 13 is sent to a reverse osmosis membrane 22 through a pump (not shown), and membrane-treated with this reverse osmosis membrane 22. As a result, the water is separated into a permeated liquid that has passed through the reverse osmosis membrane 22 and a liquid portion (concentrate) that has not passed the membrane.
Of these liquids, the permeated liquid that has passed the reverse osmosis membrane 22 can be discharged outside if the content of the hardly decomposable substance therein is the emission standard value (10 pg-TEQ/L) or less. Alternatively, the permeated liquid above can be reserved in a backwash water tank 42 of a membrane filtering section 40 as described later and can be used as backwash water for backwashing an ultrafilter membrane 41.

Further, as shown in ETG. 5, the liquid portion (concentrate) that has not passed through the reverse osmosis membrane 22 is again subjected to the reverse osmosis membrane treatment by mixing it with the hardly-decomposable-substance-containing water that has passed through the pre-filter 13.
In this manner, the concentrate is recycled several times. A concentrate that has not passed through the reverse osmosis membrane 22 by this procedure is sent to a treatment tank 31 provided in an adsorbent adding section 30.

### [Adsorbent adding section 30]

In the adsorbent adding section 30, to the liquid portion (concentrate) sent to the treatment tank 31 was added an adsorbent that is sent from an adsorbent supply section 32 through a feeder (not shown). In the treatment tank 31, the liquid portion of the concentrate and the adsorbent are mixed by stirring means, whereby the hardly decomposable substance remaining in the liquid portion can be efficiently adsorbed on the added adsorbent.

Further, when titanium dioxide is used as an adsorbent, the hardly decomposable substance in the liquid portion is adsorbed on the adsorbent, and at the same time, the hardly decomposable substance can be photodegraded by irradiation with ultraviolet light from a UV lamp. In this case, the titanium dioxide as an adsorbent works as a photocatalyst and promotes the photodegradation of the hardly decomposable substance.

### [Membrane filtering section 40]

The liquid portion (concentrate) having the adsorbent added thereto is subjected to membrane filtering treatment with an ultrafilter membrane 41 through a pump (not shown), in a membrane filtering section 40. When the membrane filtering treatment with the ultrafilter membrane 41 is carried out, deterioration of the filtering ability of this ultrafilter membrane 41 can be prevented by backwashing. On the other hand, for the above backwashing, the permeated liquid that passes through the reverse osmosis membrane 22 in the membrane concentrating section 20 may be used as water for the backwashing (backwash water) as shown in FIG. 5.
Further, to the above backwash water from a backwash water tank 42, sodium hypochlorite, citric acid, or the like may be added from a fungicide supply portion 43 through a pump (not shown).

By the membrane filtering treatment with the ultrafilter membrane 41, the liquid portion of the hardly-decomposable-substance-containing water having the adsorbent added thereto is separated into a permeated liquid and a concentrate (backwash water). Of these, the permeated liquid can be discharged outside as discharged water if the content of the hardly decomposable substance is the emission standard value (10 pg-TEQ/L) or less.

### [Ultraviolet irradiation section 50]

In an ultraviolet irradiation section 50, the concentrate (backwash discharge water) that has not passed through the ultrafilter membrane 41 in the membrane filtering section 40 may be sent to a photodegradation tank 51 and may be irradiated with ultraviolet light from an ultraviolet lamp 53 with stirring by stirring means to decompose the hardly decomposable substance. In this ultraviolet irradiation section 50, for promoting photodegradation by ultraviolet light, aqueous hydrogen peroxide may be added from a promoter supply portion 52 through a pump (not shown).
For carrying out the photodegradation in the invention, the adsorbent to be added in the adsorbent adding section 30 is required to be titanium dioxide which functions as a photocatalyst. By the use of titanium dioxide, photodegradation treatment having high decomposition capability is carried out.

### [Solid-liquid separation section 70]

In a solid-liquid separation section 70, the hardly decomposable substance that has been adsorbed on the adsorbent is separated into a solid and a liquid in a solid-liquid separation tank 71. There is no particular restriction on the means for the solid-liquid separation, and any known means can be used. Examples include settlement, centrifugation, use of a liquid cyclone, and used of a filter press.
A flocculating agent may be added to promote the separation of the adsorbent which has adsorbed the hardly decomposable substance after the photodegradation treatment and the liquid portion. If a flocculating agent is added, solid waste generates. Therefore, it is preferable to add only a small amount of a flocculating agent.
In adding a flocculating agent, a flocculating agent that is sent from a flocculating agent supply portion (not shown) through a feeder (not shown) is added to the concentrate (backwash water) containing the hardly decomposable substance that is concentrated with the ultrafilter membrane and is optionally subjected to a photodegradation treatment. In the flocculating tank (not shown), the liquid portion of the concentrate (backwash water) and the flocculating agent are mixed by stirring means, whereby the hardly decomposable substance which has adsorbed on the adsorbent, remaining in the liquid portion, is efficiently flocculated with the added flocculating agent, so that it comes to be easily settled.
If the solid-liquid separation tank 71 is a settlement tank, it is preferred that a stirring means (not shown) be provided, and stirring be carried out at a moderate rotation rate of about 1 rpm for preventing the settled substance from being solidified at the bottom thereof.
A clean supernatant is returned to the treatment tank 31 of the adsorbent adding section 30, or it can be discharged if the concentration of the hardly decomposable substance is below the emission standard value (10 pg-TEQ/L).

### [Chemical decomposition section 80]

In a chemical decomposition section 80, a peroxide from an oxidizing agent supply portion 82 is added to the precipitated substance (slurry) that is sent to a decomposition tank 81 and withdrawn from a bottom outlet of the settling tank 71 of the above solid-liquid separation section 70, and the mixture is stirred by stirring means to chemically decompose the hardly decomposable substance in the settled substance (slurry).

After completion of the chemical decomposition, a clean supernatant is returned to the treatment tank 31 of the adsorbent adding section 30, or it can be discharged if the concentration of the hardly decomposable substance is below the emission standard value (10 pg-TEQ/L).

### [Adsorbent returning section 90]

In an adsorbent returning section 90, the adsorbent after the chemical decomposition (regenerated adsorbent) is returned to the adsorbent adding section after the decomposition of the hardly decomposable substance in order to recycle the adsorbent and to allow the system to be cyclic.
In order to decrease the amount of water containing the regenerated adsorbent to be returned to the adsorbent adding section, it is preferred that the water containing the regenerated adsorbent be subjected to a solid-liquid separation.
There are no particular restrictions on the method for obtaining an adsorbent by removing water containing the adsorbent after the decomposition of the hardly decomposable substance (regenerated adsorbent). Examples include natural settlement of a solid, centrifugation, use of a liquid cyclone, use of a filter press, and membrane separation. Of them, membrane separation is preferable.
As shown in FIGs. 5 and 6, preferably, the permeated liquid is separated by means of a filter membrane, and the adsorbent after the decomposition of the hardly decomposable substance is separated from the filter membrane by backwashing the membrane. The adsorbent is then sent to the adsorbent adding section together with the backwash discharge water.
Any filter membrane may be used insofar as the particles of the intended adsorbent can be separated. The water containing the adsorbent after the chemical decomposition may have a pH value of 1 or less. Therefore, it is preferable to select an appropriate filter membrane according to the pH. The filter membrane used here includes an ultrafilter membrane (UF membrane), a microfiltration membrane (MF membrane), or the like. Of these, the ultrafilter membrane (UF membrane) is particularly preferable.
If the amount of water containing the adsorbent which has adsorbed the hardly decomposable substance is decreased since the solid-liquid separation is carried out prior to the chemical decomposition, it is not necessary to carry out the solid-liquid separation in the adsorbent returning section 90.

As mentioned above, the permeated liquid generated in the membrane concentration section 20, the membrane filtering section 40, and the adsorbent returning section 90 may be used as the backwash water or may be returned to the adsorbent tank or the like. If the content of the hardly decomposable substance is below the emission standard value (10 pg-TEQ/L), the permeated liquid can be discharged outside as discharged water. In general, the expression "discharging outside" means releasing into a river or the like.

### [Acid neutralization section 100]

When the chemical decomposition treatment is carried out, the pH value of the permeated liquid to be separated in the adsorbent returning section 90 may be 1 or less. Therefore, the permeated liquid is placed in an acid neutralization tank 101, the pH of the permeated liquid is measured by means of a pH measuring device (not shown), and a necessary amount of alkali is optionally supplied from an alkali supplying section 102 to neutralize and release the permeated liquid as the discharged water.

### [Regenerated adsorbent pH adjusting section 110]

In the adsorbent returning section 90, the backwash discharge water containing the adsorbent after separating the permeated liquid may also have a lowered pH value. Therefore, the pH value is required to be adjusted. Specifically, the backwash discharge water is placed in a pH adjustment tank 111, and the pH value of the backwash discharge water is measured using a pH measuring device (not shown), a necessary amount of alkali is optionally supplied from a pH adjuster supplying section 112 to adjust the pH of the backwash discharge water, and the pH-adjusted backwash discharge water containing the adsorbent is returned to the adsorbent tank 31.

### [Second-stage membrane filtering section 120]

When the concentration of a hardly decomposable substance in raw water varies, the outlet concentration of discharged water after the treatment correspondingly varies, and discharged water containing the hardly decomposable substance having a concentration over the emission standard value may possibly be discharged. However, the measurement of concentration of the hardly decomposable substance such as dioxin or the like in discharged water takes approximately one month by an official method or takes approximately two weeks by a simplified method, and it is practically impossible to keep the discharged water for such a period of time.

In the invention, it is preferable to provide a second-stage membrane filtering section 120 where the permeated liquid generated in each step is subjected to a membrane filtering treatment, whereby a plurality of membrane filtering treatment steps are carried out with regard to the permeated liquid for stably bringing the concentration of the hardly decomposable substance in discharged water into the emission standard value or less even when the concentration of the hardly decomposable substance in raw water varies. As the filter membrane used here, a nano-filter membrane (NF membrane) is preferable.
According to experiments made by the inventors, it has been confirmed that practicing the membrane filtering treatment twice or more not only brings the hardly decomposable substance concentration stably into the emission standard value (10 pg-TEQ/L) or less, but also brings the same into the environmental standard value (1 pg-TEQ/L) or less. The following table 1 shows a change in the concentration of dioxin in permeated liquid and a dioxin removal ratio (%) when the membrane filtering treatment was carried out twice.

**Table 1**

| First membrane filtering treatment | Dioxin concentration (pg-TEQ/L) | Second-stage membrane filtering treatment | Dioxin concentration (pg-TEQ/L) |
|---|---|---|---|
| Reverse osmosis membrane permeated water | 2.13 | Reverse osmosis membrane permeated water | ≤1.0 |
| Ultrafilter membrane permeated water | 2.3 | Nano-filter permeated water | ≤1.0 |
| Ultrafilter membrane permeated water + Reverse osmosis membrane permeated water | 1.63 | Nano-filter permeated water | ≤1.0 |
| Ultrafilter membrane permeated water + Reverse osmosis membrane permeated water + addition of 20 ppm TiO₂ | 1.63 | Ultrafilter membrane permeated water | ≤1.0 |
| Ultrafilter membrane permeated water | 5.8 | Ultrafilter membrane permeated water | ≤1.0 |
| Ultrafilter membrane permeated water + addition of 20 ppm TiO₂ and stirring for 1 hour | 5.8 | Ultrafilter membrane permeated water | ≤1.0 |

In the second-stage membrane filtering section 120, the permeated liquid generated in each step is filtered by means of a nano-filter membrane (NF membrane) 121, and the permeated liquids can be released as discharged water. A flocculated substance is preferably returned to the adsorbent tank 31.

In FIG. 6 which shows an embodiment in which only photodegradation is used, it is not required to provide the above-mentioned solid-liquid separation section 70, the acid neutralization section 100, and the regenerated adsorbent pH adjustment section 110.

### EXAMPLES

The invention will be described in more detail according to the examples, which should not be construed as limiting the scope of the invention.

### Example 1

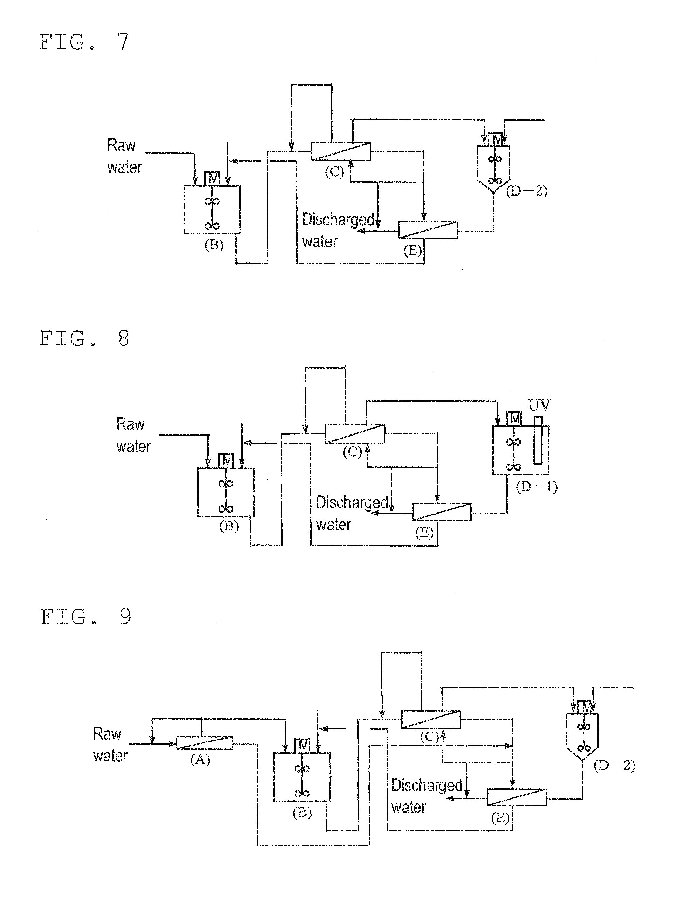

The configuration of the discharged water treatment apparatus according to Example 1 is shown in FIG. 7. The details of each step will be described below.
(B) Adsorption treatment step
   Contaminated water containing dioxins (dioxin concentration: 6,500 pg-TEQ/L) was placed in an adsorption tank having a residence time period set for 1 hour, and 1,000 ppm of diatomite was added as an adsorbent. The mixture was stirred to allow the dioxins to be adsorbed on the diatomite.

(C) Membrane filtering treatment step
   The above contaminated water to which the adsorbent had been added was subjected to membrane filtering treatment with an ultrafilter membrane (hollow fiber type, molecular cutoff: 150,000). Part of a liquid portion that had not passed through the ultrafilter membrane was added to the contaminated water and filtering was carried out at an operation pressure of 0.3 MPA. In this case, a permeated liquid had a dioxin concentration of 2.5 pg-TEQ/L, which was below the emission standard value (10 pg-TEQ/L). The ultrafilter membrane was backwashed for 1 minute with backwash water in an amount 4 times larger than the liquid that passed the ultrafilter membrane, and this backwash discharge water was taken as a concentrate and sent to the next step.

(D-2) Chemical decomposition step
   To the slurry of the concentrate containing the diatomite, sodium persulfate was added as an oxidant such that the mixture had a sodium persulfate concentration of 10 mass%, and the mixture was allowed to react at 70°C for 7 hours. A solid in a decomposition product after the reaction had a dioxin concentration of 1.,000 pg-TEQ/g, which was below the emission standard value (3,000 pg-TEQ/g).

(E) Adsorbent returning step
   The decomposed substance was filtered by means of an ultrafilter membrane (monolithic type, molecular cutoff 150,000). In this case, a permeated liquid had a dioxin concentration of 8 pg-TEQ/L, which was below the emission standard value (10 pg-TEQ/L). The ultrafilter membrane was backwashed with the permeated liquid generated in the membrane filtering step (C) to free the diatomite adhering to the ultrafilter membrane. The backwash discharge water was placed in an adsorption tank having a residence time period set for 1 hour together with dioxin-containing contaminated water (raw water to be treated having a dioxin concentration of 6,500 pg-TEQ/L), and the same operations as the operation in the adsorption step (B) and the membrane filtering step (C) were carried out repeatedly. The contaminated water containing an adsorbent was filtered with an ultrafilter membrane (hollow fiber type, molecular cutoff of: 150,000). Part of a liquid portion that had not passed through the ultrafilter membrane was added to the contaminated water containing a hardly decomposable substance including diatomite, and the mixture was filtered at an operation pressure of 0.3 MPA. The resultant permeated liquid had a dioxin concentration of 3.0 pg-TEQ/L or less. From the results, it was confirmed that the dioxin removal capability almost equivalent to the initial value could be realized.

### Example 2

The configuration of the discharged water treatment apparatus according to Example 2 is shown in FIG. 8. The details of each step will be described below.
(B) Adsorption treatment step
   Contaminated water containing dioxins (dioxin concentration: 6,500 pg-TEQ/L) was placed in an adsorption tank having a residence time period set for 1 hour, and 15 ppm of titanium dioxide was added as an adsorbent. The mixture was stirred to allow the dioxins to be adsorbed on the titanium dioxide.

(C) Membrane filtering step
   The above contaminated water to which the adsorbent had been added was subjected to membrane filtering treatment with an ultrafilter membrane (hollow fiber type, molecular cutoff: 150,000). Part of a liquid portion that had not passed through the ultrafilter membrane was added to the contaminated water including titanium dioxide and filtering was carried out at an operation pressure of 0.2 MPA. In this case, a permeated liquid had a dioxin concentration of 8 pg-TEQ/L which was below the emission standard value (10 pg-TEQ/L). The ultrafilter membrane was backwashed for 1 minute with backwash water in an amount 4 times larger than the liquid that passed the ultrafilter membrane, and this backwash discharge water was taken as a concentrate.

(D-1) Photodegradation step
   The concentrate was transferred to a photodegradation tank (D-1) having a residence time period set for 24 hours, and irradiated with a UV light (254 nm). The mixture of water and titanium dioxide after irradiation had a dioxin concentration of 500 pg-TEQ/L.

(E) Adsorbent returning step
   A mixture of water and titanium dioxide after photodegradation was filtered with an ultrafilter membrane (hollow fiber type, molecular cutoff: 10,000). The permeated liquid had a dioxin concentration of 4 pg-TEQ/L, which was below the emission standard value (10 pg-TEQ/L). The ultrafilter membrane was backwashed with the permeated liquid generated in the membrane filtering step (C) to free the titanium dioxide adhering to the ultrafilter membrane, and transferred to the adsorption treatment step (B). The backwash discharge water was placed in an adsorption tank having a residence time period set for 1 hour together with dioxin-containing contaminated water (raw water to be treated having a dioxin concentration of 6,500 pg-'lEQ/L), and the same operations as the operation in the adsorption step (B) and the membrane filtering step (C) were carried out repeatedly. The contaminated water containing the adsorbent was filtered with an ultrafilter membrane (hollow fiber type, molecular cutoff: 150,000). Part of a liquid portion that had not passed through the ultrafilter membrane was added to the contaminated water containing a hardly decomposable substance including titanium dioxide, and the mixture was filtered at an operation pressure of 0.2 MPA. The resultant permeated liquid had a dioxin concentration of 7.0 pg-TEQ/L. From the results, it was confirmed that the dioxin removal capability almost equivalent to the initial value could be realized.

### Example 3

The configuration of the discharged water treatment apparatus according to Example 3 is shown in FIG. 9. The details of each step will be described below.
(A) Membrane concentration treatment step
   Contaminated water containing dioxins (dioxin concentration: 6,500 pg-TEQ/L) was subjected to membrane filtering treatment with a reverse osmosis membrane (spiral type, NaCl elimination ratio: 95 mass%). Part of a liquid portion that had not passed through the reverse osmosis membrane was added to the contaminated water containing a hardly decomposable substance and filtering was carried out at an operation pressure of 1 MPa or more. Two-third of the raw water was taken as a permeated liquid. In this case, the permeated liquid had a dioxin concentration of 1 pg-TEQ/L, which was below the emission standard value (10 pg-T.EQ/L). The permeated liquid was mixed with the permeated liquid generated in the membrane filtering step
(C) and used as the backwash water for the adsorbent returning step (E) and as the backwash water for the membrane filtering step (C).

(B) Adsorption treatment step
   A concentrate of which the amount became one-third of the raw water to be treated in the membrane concentration treatment (A) was placed in an adsorption tank having a residence time period set for 1 hour, and 2,000 ppm of activated clay was added as an adsorbent. The mixture was stirred to allow the dioxins to be adsorbed on the activated clay.

(C) Membrane filtering treatment step
   The above contaminated water to which the adsorbent had been added was subjected to membrane filtering treatment with an ultrafilter membrane (hollow fiber type, molecular cutoff: 10,000). Part of a liquid portion that had not passed through the ultrafilter membrane was added to the contaminated water including activated clay and filtering was carried out at an operation pressure of 0.3 MPa. In this case, a permeated liquid had a dioxin concentration of 1.8 pg-TEQ/L, which was below the emission standard value (10 pg-TEQ/L). Liquid which had passed the reverse osmosis membrane and liquid which had passed the ultrafilter membrane were mixed and treated as discharged water (a dioxin concentration of 1.3 pg-TEQ/L). The solid matter adhering to the ultrafilter membrane was backwashed for 1 minute with backwash water in an amount 4 times larger than the liquid that passed the ultrafilter membrane, and this backwash discharge water was taken as a concentrate, and sent to the next step.

(D-2) Chemical decomposition treatment step
   To the slurry containing the activated clay, sodium peroxide was added such that the mixture had a sodium persulfate concentration of 10 mass%, and the mixture was allowed to react at 70°C for 7 hours as in Example 1. A solid in a decomposition product after the reaction had a dioxin concentration of 950 pg-TEQ/g which was below the emission standard value (3,000 pg-TEQ/g).

(E) Adsorbent returning step
   The liquid portion of this decomposed substance had a dioxin concentration of 15 pg-TEQ/L. This liquid was filtered by an ultrafilter membrane (monolithic type, molecular cutoff: 150,000). The permeated liquid had a dioxin concentration of 3 pg-TEQ/L which was below the emission standard value (10 pg-TEQ/L). The liquid obtained by the membrane filtering treatment (C) was used as the backwash water to free the activated clay adhering to the ultrafilter membrane, and the activated clay was transferred to the adsorbent treatment step (B). When the returned activated clay was reused, it was confirmed that the dioxin removal capability almost equivalent to the initial value could be realized.

### Example 4

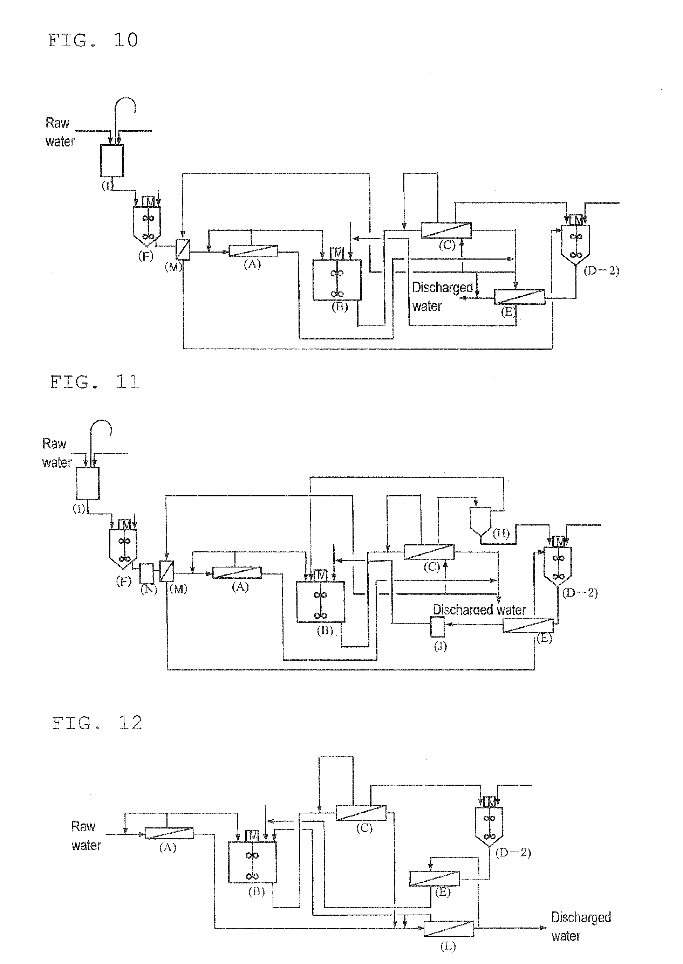

The configuration of the discharged water treatment apparatus according to Example 4 is shown in FIG. 10. The details of each step will be described below.
(I) Volatile substance removal step (F), Free chlorine neutralization step and (M) Pre-filtering step
   3 vvm of a nitrogen gas as the inert gas was bubbled to contaminated water containing dioxins (raw water to be treated, dioxin concentration: 7,000 pg-TEQ/L, the volatile substance (HCl, 300 ppm) and SS (floating solid) 100 mg/L), thereby to remove HCl (step I). Then, as a chemical, sodium bisulfite was added with stirring such that the amount of sodium bisulfite became 150 mg/L which was 3 times larger than the amount of the free chlorine (step F). The mixture was caused to pass through a pre-filter (M) (tubular type, pore diameter: 1 µm) (step M). (When a differential pressure was generated, the pre-filter was washed with a mixture of the permeated liquid of the reverse osmosis membrane and the permeated liquid of the ultrafilter membrane until there was no differential pressure. The washing water was transferred to the chemical decomposition tank, and chemically decomposed as a concentrate.)

(A) Membrane concentration treatment step
   The dioxin-containing water before pre-treatment was filtered by a reverse osmosis membrane (hollow fiber type, NaCl elimination ratio: 95 mass%). Part of a liquid portion that had not passed through the ultrafilter membrane was added to the contaminated water including a hardly decomposable substance and filtering was carried out at an operation pressure of MPa or larger. Two-third of the raw water was taken as the permeated water. In this case, the permeated liquid had a dioxin concentration of 1.3 pg-TEQ/L which was below the emission standard value (10 pg-TEQ/L).

(B) Adsorption treatment step
   In the same manner as in Example 1, a concentrate of which the amount became one-third of the raw water was placed in an adsorption tank having a residence time period set for 1 hour, and 2,000 ppm of activated clay was added as an adsorbent. The mixture was stirred to allow the dioxins to be adsorbed on the activated clay.

(C) Membrane filtration treatment step
   The concentrate of the contaminated water which contains activated clay was subjected to membrane filtering treatment with an ultrafilter membrane (hollow fiber type, molecular cutoff: 10,000). Part of a liquid portion that had not passed through the ultrafilter membrane was added to the contaminated water including activated clay and filtering was carried out at an operation pressure of 0.1 MPa. In this case, the permeated liquid had a dioxin concentration of 1.8 pg-TEQ/L, which was below the emission standard value (10 pg-TEQ/L). Liquid which had passed the reverse osmosis membrane and liquid which had passed the ultrafilter membrane were mixed and the mixture (dioxin concentration: 1.4 pg-TEQ/L) was used as backwash water for the ultrafilter membrane. The solid matter adhering to the ultrafilter membrane was backwashed for 1 minute with backwash water in an amount 4 times larger than the water that passed the ultrafilter membrane, and this backwash discharge water was taken as a concentrate.

(D-2) Chemical decomposition treatment step
   In the same manner as in Example 1, to the slurry containing the activated clay, sodium persulfate was added as an oxidant such that the mixture had a sodium persulfate concentration of 3 mass% (100 moles or more of the hardly decomposable substance), and the mixture was allowed to react at 70°C for 24 hours. Thereafter, 3 mass% of sodium persulfate was added to allow the reaction to proceed for 24 hours. A solid in a decomposition product after the reaction had a dioxin concentration of 350 pg-TEQ/g which was below the emission standard value (3,000 pg-TEQ/g).

(E) Adsorbent returning step
   The liquid portion of this decomposed substance had a dioxin concentration of 8 pg-TEQ/L which was below the emission standard value (10 pg-TEQ/L) . The water containing the activated clay after the chemical decomposition was filtered by an ultrafilter membrane (monolithic type, molecular cutoff: 150,000). The permeated liquid obtained by the membrane concentration treatment step (A) and the permeated liquid obtained by the membrane filtering treatment step (C) were mixed and taken as discharged water. The ultrafilter membrane was backwashed with a mixture of a permeated liquid from the reverse osmosis membrane and a permeated liquid from an ultrafilter membrane to free the activated clay adhering to the ultrafilter membrane. The activated clay was transferred to the adsorbent treatment step (B). The returned activated clay was reused, and it was confirmed that the dioxin removal capability almost equivalent to the initial value could be realized.

### Example 5

The configuration of the discharged water treatment apparatus according to Example 5 is shown in FIG. 11. The details of each step will be described below.
(I) Volatile substance removal step, (F) Chlorine neutralization step, (N) Pre-treatment pH adjusting step, (M) Pro-filtering step
   3 vvm of a nitrogen gas as an inert gas was bubbled through contaminated water containing dioxins (dioxin concentration: 6,500 pg-TEQ/L, the volatile component (HCl, 150 ppm) and SS 100 mg/L), thereby to remove HCl (step I). Then, as a chemical, sodium bisulfite was added with stirring such that the amount of sodium bisulfite became 150 mg/L, which was 3 times larger than the amount of the free chlorine (step F). Since the pH was 4.5, a 20 mass% sodium hydroxide solution was added to a pH tank (N) to cause the pH to 7 (step N). The mixture was caused to pass through a pre-filter (tubular type, pore diameter: 1 µm) (step M).

(A) Membrane concentration treatment step
   The dioxin-containing contaminated water that had passed the pre-filter was filtered by a reverse osmosis membrane (hollow fiber type, NaCI elimination ratio: 95 mass%). Part of a liquid portion that had not passed through the reverse osmosis membrane was added to the contaminated water containing dioxins and filtering was carried out at an operation pressure of 1.2 MPa or larger. Two-third of the raw water was taken as a permeated liquid. In this case, the permeated liquid had a dioxin concentration of 1.2 pg-TEQ/L which was below the emission standard value (10 0 pg-TE'Q/L) .

(B) Adsorption treatment step
   In the same manner as in Example 1, a concentrate of which the amount is one-third of the raw water was placed in an adsorption tank having a residence time period set for 1 hour, and 100 ppm of diatomite was added as an adsorbent. The mixture was stirred to allow the dioxins to be adsorbed on the diatomite.

(C) Membrane filtering treatment step
   The concentrate containing diatomite was subjected to membrane filtering treatment with an ultrafilter membrane (hollow fiber type, molecular cutoff: 10,000). Part of a liquid portion that had not passed through the ultrafilter membrane was added to the dioxin-containing contaminated water including diatomite and filtering was carried out at an operation pressure of 0.2 MPa. In this case, the permeated liquid had a dioxin concentration of 1.5 pg-TEQ/L, which was below the emission standard value (10 pg-TEQ/L) . Liquid which had passed the reverse osmosis membrane and liquid which had passed the ultrafilter membrane were mixed and the mixture was taken as discharge water (a dioxin concentration of 1.3 pg-TEQ/L) . The solid matter adhering to the ultrafilter membrane was backwashed for 1 minute with water in an amount 4 times larger than the liquid that passed the ultrafilter membrane, and this backwash discharge water was taken as a concentrate.

(H) Solid-liquid separation step and (D-2) Chemical decomposition step
   The concentrate was transferred to a settlement tank (H) having a residence time period set for 12 hours. A layer of a settled matter formed at the bottom was transferred to a chemical decomposition tank. As compared with the case where the chemical decomposition was carried out without settlement, the volume was reduced to 1/10 or less. Sodium persulfate was added as an oxidant to the slurry containing the diatomite such that the mixture had a sodium persulfate concentration of 5 mass% (100 moles or more of the hardly decomposable substance), and the mixture was allowed to react at 70°C for 12 hours. The slurry (including a solid) had a dioxin concentration of 30 pg-TEQ/L.

(E) Adsorbent returning step
   The chemically decomposed slurry had a pH value of 1.5, and therefore, was neutralized to have a pH value of 7 with a 20 mass% sodium hydroxide solution in the neutralization tank (J). The slurry was transferred to the adsorbent treatment step (B) and reused. The returned diatomite was reused, and it was confirmed that the dioxin removal capability almost equivalent to the initial value could be realized.

### Example 6 (Second-stage membrane filtering step)

The configuration of the discharged water treatment apparatus according to Example 6 is shown in FIG. 12. The details of each step will be described below.
In Example 3, a permeated liquid from the membrane concentration treatment step (A) and a permeated liquid from the membrane filtering treatment step (C) were mixed (dioxin concentration: 1.3 pg-TEQ/L), and the resulting mixture was filtered using a nano-filter membrane (L) (hollow fiber type, sodium chloride elimination ratio: 30 mass%). Part of a liquid portion that had not passed through the nano-filter membrane was mixed with the permeated liquids obtained in the membrane concentration treatment (A) and the membrane filtering treatment (C), and filtering was carried out at an operation pressure of 0.5 MPA. In this case, the permeated liquid had a dioxin concentration of 1 pg-TEQ/L or less. The resulting concentrate was transferred to the adsorbent tank in the step (B). The dioxin concentration of the discharged water and the chemically decomposed substance were not changed.

### INDUSTRIAL APPLICABILITY

The method of this invention can be widely used as a treatment method that can detoxify hardly decomposable organic compounds such as dioxins and PCBs, contained in industrial discharged water, water seeping out from soil, discharged washing water caused by demolishing of incinerators and their concentrates on the on-site closed system and that can stably bring the concentrations of the hardly decomposable substances in discharged water into values below the emission standard value.
In addition, according to the method of the invention, since the adsorbent is reused (recycled), cycling discharging treatment becomes possible, enabling the amount of waste (discharged solid) to be minimized.

## Claims

1. A method for treating a hardly-decomposable-substance-containing water which comprises:
(B) adding an adsorbent to water containing a hardly decomposable substance to cause the hardly decomposable substance to be adsorbed on the adsorbent (adsorption treatment step);
(C) separating a permeated liquid through a filter membrane to concentrate the adsorbent which has adsorbed the hardly decomposable substance (membrane filtering treatment step);
(D) decomposing the hardly decomposable substance which has been adsorbed on the concentrated adsorbent (hardly decomposable substance decomposition step); and
(E) returning the adsorbent after the decomposition of the hardly decomposable substance to the adsorption treatment step (B) (adsorbent returning step).

2. The method for treating hardly-decomposable-substance-containing water according to claim 1, wherein the step (E) is the step of separating the water containing the adsorbent after the decomposition of the hardly decomposable substance into a solid and a liquid, and returning the adsorbent to the adsorbent treatment step (B).

3. The method for treating hardly-decomposable-substance-containing water according to claim 2, wherein the step (E) is the step of separating a permeated liquid through a filter membrane and backwashing the filter membrane to free the adsorbent therefrom after the decomposition of the hardly decomposable substance, and returning the adsorbent to the adsorbent treatment step (B).

4. The method for treating hardly-decomposable-substance-containing water according to any one of claims 1 to 3, wherein the step (D) is the step (D-1) of decomposing the hardly decomposable substance which has been adsorbed on the concentrated adsorbent by irradiating with UV light (photodegradation step) and/or the step (D-2) of chemically decomposing the hardly decomposable substance which has been adsorbed on the concentrated adsorbent with a peroxide without performing desorption from the adsorbent (chemical decomposition step).

5. The method for treating hardly-decomposable-substance-containing water according to claim 4, wherein the step (D-2) uses the peroxide in an amount of at least 100 times larger in molar relative to that of the hardly decomposable substance.

6. The method for treating hardly-decomposable-substance-containing water according to any one of claims 1 to 5 which further comprises the step (A) of separating a permeated liquid from the water containing the hardly decomposable substance through a reverse osmosis membrane (RO membrane) or a nano-filter membrane (NF membrane) to concentrate the hardly decomposable substance (membrane concentrating treatment step).

7. The method for treating hardly-decomposable-substance-containing water according to any one of claims 1 to 6, which further comprises the step (I) of removing a volatile component contained in the hardly-decomposable-substance-containing water (volatile substance removal step).

8. The method for treating hardly-decomposable-substance-containing water according to any one of claims 1 to 7, which further comprises the step (M) of removing a solid matter contained in the hardly-decomposable-substance-containing water (pre-filtering step).

9. The method for treating hardly-decomposable-substance-containing water according to any one of claims 1 to 8, which further comprises the step (G) of backwashing the filter membrane used in the step (C) to free the adsorbent which has adsorbed the hardly decomposable substance from the filter membrane (backwash step).

10. The method for treating hardly-decomposable-substance-containing water according to any one of claims 1 to 9, wherein the adsorbent added in the step (B) is one inorganic adsorbent, or two or more inorganic adsorbents, which is or are selected from the group consisting of titanium dioxide, zeolite, acid clay, activated clay, diatomite, metal oxide, metal powder, activated carbon and carbon black.

11. The method for treating hardly-decomposable-substance-containing water according to claim 10, wherein the adsorbent added in the step (B) is titanium dioxide.

12. The method for treating hardly-decomposable-substance-containing water according to any one of claims 1 to 11, wherein the filter membrane used in the step (C) is selected from the group consisting of an ultrafilter membrane (UF membrane), a nano-filter membrane (NF membrane), a microfiltration membrane (MF membrane) and a reverse osmosis membrane (RO membrane).

13. The method for treating hardly-decomposable-substance-containing water according to any one of claims 4 to 12, wherein the peroxide used in the step (D-2) is a persulfate.

14. The method for treating hardly-decomposable-substance-containing water according to any one of claims 1 to 13, wherein at least part of the hardly decomposable substance concentrated in the step (A) and/or the adsorbent which has adsorbed the hardly decomposable substance concentrated in the step (C) are/is returned to the water containing the hardly decomposable substance (raw water to be treated), or a step upstream of the step (A) or the step (C).

15. An apparatus for treating hardly-decomposable-substance-containing water, which comprises:
an adsorbent adding section for adding an adsorbent to water containing a hardly decomposable substance;
a membrane filtering section for separating a permeated liquid through a filter membrane to concentrate the adsorbent which has adsorbed the hardly decomposable substance;
a hardly decomposable substance decomposing section for decomposing the hardly decomposable substance which has been adsorbed on the adsorbent; and
an adsorbent returning section for returning the adsorbent after the decomposition of the hardly decomposable substance to the adsorbent adding section.

16. The apparatus for treating hardly-decomposable-substance-containing water according to claim 15, which comprises:
a volatile substance removal section for removing a volatile substance contained in the hardly-decomposable-substance-containing water;
a reducing substance introduction section for introducing a reducing substance to water containing a hardly decomposable substance to neutralize free chlorine in the water;
a membrane concentrating section for separating a permeated liquid from the water containing a hardly decomposable substance through a reverse osmosis membrane (RO membrane) or a nano-filter membrane (NF membrane) to concentrate the hardly decomposable substance;
an adsorbent adding section for adding an adsorbent to the concentrated hardly decomposable substance to cause the adsorbent to adsorb the hardly decomposable substance,
a membrane filtering section for separating a permeated liquid through a filter membrane to concentrate the adsorbent which has adsorbed the hardly decomposable substance;
a hardly decomposable substance decomposing section for decomposing the hardly decomposable substance which has been adsorbed on the adsorbent; and
an adsorbent returning section for separating a permeated liquid through a filter membrane and returning the adsorbent after the decomposition of the hardly decomposable substance.
